# EUROPEAN PATENT APPLICATION

(11) **EP 2 696 509 A1**
(43) Date of publication of application: **12.02.2014**
(21) Application number: 12796031.8
(22) Date of filing: 30.05.2012
(51) Int. Cl.: H04B 1/06, H02J 13/00, H04B 1/16, H04H 20/12, H04H 40/00, H04H 60/14, H04M 3/487

(54) **RECEIVING DEVICE AND METHOD, INFORMATION DISTRIBUTION DEVICE AND METHOD, AND INFORMATION DISTRIBUTION SYSTEM**

(30) Priority: 06.06.2011 JP 2011126026
(71) Applicant: Sony Corporation, Tokyo 108-0075 (JP)
(72) Inventor: YAMAGISHI Yasuaki, Tokyo 108-0075 (JP)
(74) Representative: Ealey, Douglas Ralph
(86) International application number: PCT/JP2012/063910
(87) International publication number: WO 2012/169402

(57) **Abstract**

The present technology relates to a reception apparatus and method by which the load on an electric power system can be decreased at the time of information delivery, to an information delivery apparatus and method, and to an information delivery system. An electric power supply information notification unit notifies, on the basis of content delivery information notified from an information delivery apparatus that delivers content by utilizing a delivery frequency band in a delivery time band, a monitoring control apparatus of electric power supply information including an electric power supply amount and an electric power supply time at the time of receiving the content, the monitoring control apparatus monitoring and controlling electric power supply by an electric power system. A control unit, when electric power supply in the delivery time band is ensured by evaluation by the monitoring control apparatus of the feasibility of electric power supply on the basis of the electric power supply information, controls the content in a reception-enabled state on the basis of the notified delivery information. A content reception unit receives the content delivered from the information delivery apparatus. The present technology can be applied to a content delivery system for delivering content, for example.

## Description

### TECHNICAL FIELD

The present technology relates to a reception apparatus and method, an information delivery apparatus and method, and an information delivery system, and particularly to a reception apparatus and method, an information delivery apparatus and method, and an information delivery system that enable the load on an electric power system to be decreased at the time of information delivery.

### BACKGROUND ART

In recent years, due to the development of information communication means, services for delivering information such as content by utilizing various information communication means have become common. As a result, the amount of traffic for data communications has been steadily increasing, and means for dealing with this rapidly increasing traffic are being sought.

As one of the means, a technology called "cognitive radio" has been proposed whereby a terminal apparatus or a base station recognizes the wireless environment and dynamically switches the utilized communication system or frequency so as to effectively utilize frequencies. In cognitive radio, frequency-sharing systems that utilize a frequency allocated to an existing wireless system in another wireless system are being studied for practical application.

For example, the technology would enable a frequency band that is allocated to an existing wireless system but that is not being used or utilized in a limited time in an associated region to be available in another wireless system. Particularly, in the United States, the technology is moving toward practical application for exploiting television broadcast vacant channels, or the so-called "TV white spaces" (see Non-patent Document 1, for example).

Non-patent Document 1 describes a mechanism in which a database (white space database: WSDB) registering frequencies and time bands that are available in each region is provided, and a radio device (TV Band Devices (TVBD)) makes an inquiry as to whether or not, on the basis of the current position, its frequency is available.

### CITATION LIST

### NON-PATENT DOCUMENT

Non-patent Document 1: Fujii, K., "Core Technology Using White Space for Eliminating Radio Wave Utilization Loss", [online], businessnetwork.jp, [searched on May 2, 2011], Internet <URL: http://businessnetwork.jp/tabid/65/artid/110/page/2/Default.aspx>

### SUMMARY OF THE INVENTION

### PROBLEMS TO BE SOLVED BY THE INVENTION

Broadcast media represented by television broadcasts have the simultaneous broadcasting function as their delivery characteristics. In order to fully exploit the delivery characteristics, the number of terminal apparatuses that simultaneously receive the simultaneously broadcast data needs to be maximized.

In order to increase the concurrent simultaneous reception performance, the number of terminal apparatuses that are activated simultaneously may be maximized. However, as the number of the simultaneously activated terminal apparatuses increases, electric power demand rapidly increases and may possibly put excessive load on an electric power system.

The present technology was made in view of such circumstances and aims to decrease the load on the electric power system at the time of information delivery.

### SOLUTIONS TO PROBLEMS

A reception apparatus according to a first aspect of the present technology includes: an electric power supply information notification unit that, on the basis of content delivery information notified from an information delivery apparatus that delivers content by utilizing a delivery frequency band in a delivery time band, notifies a monitoring control apparatus of electric power supply information including an electric power supply amount and an electric power supply time at the time of receiving the content, the monitoring control apparatus monitoring and controlling electric power supply by an electric power system; a control unit that implements control on the basis of the notified delivery information such that a content reception-enabled state is achieved when the electric power supply in the delivery time band is ensured by an evaluation of electric power supply feasibility based on the electric power supply information by the monitoring control apparatus; and a content reception unit that receives the content delivered from the information delivery apparatus.

The electric power supply information notification unit may notify the monitoring control apparatus of the electric power supply information on the basis of delivery information re-notified from the information delivery apparatus when the electric power supply in the delivery time band cannot be ensured by the electric power supply feasibility evaluation based on the electric power supply information by the monitoring control apparatus.

The control unit may select desired content from the content delivered from the information delivery apparatus on the basis of the notified delivery information, and the electric power supply information notification unit may notify the electric power supply information about the selected content.

The control unit, on the basis of the delivery information of the selected content, may activate the reception apparatus so as to achieve the content reception-enabled state immediately before delivery of the content from the information delivery apparatus.

The delivery time band and the delivery frequency band may be determined on the basis of frequency utilization status information concerning a frequency band utilization status in each time band in a predetermined region.

A reception method according to the first aspect of the present technology corresponds to the reception apparatus according to the first aspect of the present technology.

In the reception apparatus and method according to the first aspect of the present technology, on the basis of the content delivery information notified from the information delivery apparatus that delivers the content by utilizing the delivery frequency band in the delivery time band, electric power supply information including the electric power supply amount and the electric power supply time at the time of receiving the content is notified to the monitoring control apparatus that monitors and controls electric power supply by the electric power system. When the electric power supply in the delivery time band is ensured by the evaluation of electric power supply feasibility based on the electric power supply information by the monitoring control apparatus, the content reception-enabled state is achieved on the basis of the notified delivery information, and the content delivered from the information delivery apparatus is received.

An information delivery apparatus according to a second aspect of the present technology includes a content acquisition unit that acquires content to be delivered; a frequency utilization status information acquisition unit that acquires frequency utilization status information concerning a frequency band utilization status in each time band in a predetermined region; a delivery evaluation unit that, on the basis of the acquired frequency utilization status information, evaluates a delivery time band for delivering the acquired content and a delivery frequency band utilized for the delivery; a delivery information notification unit that notifies a plurality of reception apparatuses in the region of delivery information about the content to be delivered by utilizing the delivery frequency band in the delivery time band; an electric power supply evaluation result reception unit that receives an evaluation result concerning the feasibility of electric power supply to the plurality of reception apparatuses in the delivery time band, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system; and a content delivery unit that, when the electric power supply in the delivery time band is ensured by the evaluation of the feasibility of electric power supply, delivers the acquired content to the plurality of reception apparatuses that are placed in a delivery-enabled state in accordance with the delivery information, by utilizing the delivery frequency band in the delivery time band. The delivery information notification unit, when the electric power supply in the delivery time band cannot be ensured by the evaluation of the feasibility of electric power supply, notifies the plurality of reception apparatuses in the region of the delivery information with one or both of the delivery time band and the delivery frequency band modified.

The information delivery apparatus may further include an evaluation reference information acquisition unit that acquires evaluation reference information as a reference for evaluating the delivery time band and the delivery frequency band. The delivery evaluation unit evaluates the delivery time band and the delivery frequency band on the basis of the acquired evaluation reference information.

The evaluation reference information may be a reference for highly evaluating the cost of a time band in which viewing of the content by more viewers can be expected, and for highly evaluating the cost of a frequency band in which a higher delivery bit rate for the content is expected.

The evaluation reference information may be a reference for highly evaluating the cost of a time band in which viewing of the content by more viewers is expected.

The evaluation reference information may be a reference for highly evaluating the cost of a frequency band in which a higher delivery bit rate for the content is expected.

The frequency utilization status information acquisition unit may acquire the frequency utilization status information for each region from an information management apparatus that manages the frequency utilization status information for each region.

The information delivery apparatus may include a delivery apparatus and a management apparatus, the delivery apparatus may include the content acquisition unit and the content delivery unit, and the management apparatus may include the frequency utilization status information acquisition unit, the delivery evaluation unit, the delivery information notification unit, and the electric power supply evaluation result reception unit.

An information delivery method according to the second aspect of the present technology corresponds to the information delivery apparatus according to the second aspect of the present technology.

In the information delivery apparatus and method according to the second aspect of the present technology, content to be delivered is acquired; frequency utilization status information concerning a frequency band utilization status in each time band in a predetermined region is acquired; on the basis of the acquired frequency utilization status information, a delivery time band for delivering the acquired content and a delivery frequency band utilized for the delivery are evaluated; a plurality of reception apparatuses in the region is notified of delivery information about the content to be delivered in the delivery time band by utilizing the delivery frequency band; an evaluation result concerning the feasibility of electric power supply to the plurality of reception apparatuses in the delivery time band is received, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system; when the electric power supply in the delivery time band is ensured by the evaluation of the feasibility of electric power supply, the acquired content is delivered to the plurality of reception apparatuses that are placed in a delivery-enabled state in accordance with the delivery information, by utilizing the delivery frequency band in the delivery time band; and, when the electric power supply in the delivery time band cannot be ensured by the evaluation of the feasibility of electric power supply, the delivery information with one or both of the delivery time band and the delivery frequency band modified is notified to the plurality of reception apparatuses in the region.

An information delivery system according to a third aspect of the present technology includes an information delivery apparatus; an information management apparatus; a plurality of reception apparatus; and a monitoring control apparatus that monitors and controls electric power supply by an electric power system. The information delivery apparatus includes a content acquisition unit that acquires content to be delivered; a frequency utilization status information acquisition unit that acquires a frequency utilization status information from the information management apparatus that manages the frequency utilization status information concerning a frequency band utilization status in each time band in a predetermined region; a delivery evaluation unit that evaluates, on the basis of the acquired frequency utilization status information, a delivery time band for delivering the acquired content and a delivery frequency band utilized for the delivery; and a delivery information notification unit that notifies a plurality of the reception apparatuses in the region of delivery information about the content to be delivered by utilizing the delivery frequency band in the delivery time band. Each of the plurality of reception apparatuses includes an electric power supply information notification unit that notifies, on the basis of the delivery information notified from the information delivery apparatus, the monitoring control apparatus of electric power supply information including an electric power supply amount and an electric power supply time for receiving the content. The monitoring control apparatus includes an electric power supply evaluation unit that evaluates, on the basis of the electric power supply information notified from each of the plurality of reception apparatuses, the feasibility of electric power supply to the plurality of the reception apparatuses in the delivery time band; and an electric power supply result notification unit that notifies the information delivery apparatus of a result of evaluation of the feasibility of electric power supply. The information delivery apparatus further includes an electric power supply evaluation result reception unit that receives the electric power supply feasibility result notified from the monitoring control apparatus; and a content delivery unit that, when the electric power supply in the delivery time band is ensured by the electric power supply feasibility evaluation, delivers the acquired content to the plurality of reception apparatuses that are placed in a delivery-enabled state in accordance with the delivery information by utilizing the delivery frequency band in the delivery time band. The delivery information notification unit notifies, when the electric power supply in the delivery time band cannot be ensured by the electric power supply feasibility evaluation, the plurality of reception apparatuses in the region of the delivery information with one or both of the delivery time band and the delivery frequency band modified. Each of the reception apparatuses further includes a control unit that, when the electric power supply in the delivery time band is ensured by the electric power supply feasibility evaluation, implements control based on the notified delivery information such that a content reception-enabled state is achieved; and a content reception unit that receives the content delivered from the information delivery apparatus.

The information delivery apparatus, the information management apparatus, the plurality of reception apparatuses, and the monitoring control apparatus may be independent apparatuses, or internal blocks of a single apparatus.

In the information delivery system according to the third aspect of the present technology, content to be delivered is acquired by an information delivery apparatus; frequency utilization status information is acquired from an information management apparatus that manages frequency utilization status information concerning a frequency band utilization status in each time band in a predetermined region; a delivery time band for delivering the acquired content and a delivery frequency band utilized for the delivery are evaluated on the basis of the acquired frequency utilization status information; a plurality of reception apparatuses in the region is notified of delivery information about the content to be delivered by utilizing the delivery frequency band in the delivery time band; a monitoring control apparatus is notified by the plurality of reception apparatuses of electric power supply information including an electric power supply amount and an electric power supply time for receiving the content on the basis of the delivery information notified from the information delivery apparatus; the feasibility of electric power supply to the plurality of reception apparatuses in the delivery time band is evaluated by the monitoring control apparatus on the basis of the electric power supply information notified from each of the plurality of reception apparatuses; a result of evaluation of the electric power supply feasibility is notified to the information delivery apparatus; the electric power supply feasibility result notified from the monitoring control apparatus is received by the information delivery apparatus; when the electric power supply in the delivery time band is ensured by the electric power supply feasibility evaluation, the acquired content is delivered to the plurality of reception apparatuses that are placed in a delivery-enabled state in accordance with the delivery information by utilizing the delivery frequency band in the delivery time band; when the electric power supply in the delivery time band cannot be ensured by the electric power supply feasibility evaluation, the delivery information with one or both of the delivery time band and the delivery frequency band modified is notified to the plurality of reception apparatuses in the region; when the electric power supply in the delivery time band is ensured by the electric power supply feasibility evaluation, each of the reception apparatuses is controlled to be placed in a content reception-enabled state on the basis of the notified delivery information; and the content delivered from the information delivery apparatus is received.

### EFFECTS OF THE INVENTION

According to the first through third aspects of the present technology, the load on the electric power system at the time of information delivery can be decreased.

### BRIEF DESCRIPTION OF DRAWINGS

Fig. 1 shows a configuration of an embodiment of a content delivery system according to the present technology.
Fig. 2 shows a configuration example of a broadcast server.
Fig. 3 shows a configuration example of a broadcast resource management server.
Fig. 4 shows a configuration example of a WSDB.
Fig. 5 shows a configuration example of a TVBD.
Fig. 6 shows a configuration example of an electric power control server.
Fig. 7 is a flowchart illustrating a content delivery process.
Fig. 8 is a flowchart illustrating the content delivery process.
Fig. 9 is a flowchart illustrating the details of a delivery evaluation process.
Fig. 10 shows a common free block identification method.
Fig. 11 shows a cost evaluation graph evaluation method (in which time low-cost is set).
Fig. 12 shows a cost evaluation graph evaluation method (in which frequency low-cost is set).
Fig. 13 shows a cost evaluation graph evaluation method (in which time high-cost and frequency low-cost are set).
Fig. 14 shows an example of a content selection screen.
Fig. 15 is a flowchart illustrating a delivery schedule re-notification process.
Fig. 16 shows another configuration of the embodiment of the content delivery system according to the present technology.
Fig. 17 shows yet another configuration of the embodiment of the content delivery system according to the present technology.
Fig. 18 shows a configuration example of a computer.

### MODE FOR CARRYING OUT THE INVENTION

In the following, an embodiment of the present technology will be described. The description will be made in the following order:
1. First embodiment
2. Second embodiment
3. Third embodiment
4. Modification

### <1. First embodiment>

### [Configuration of content delivery system]

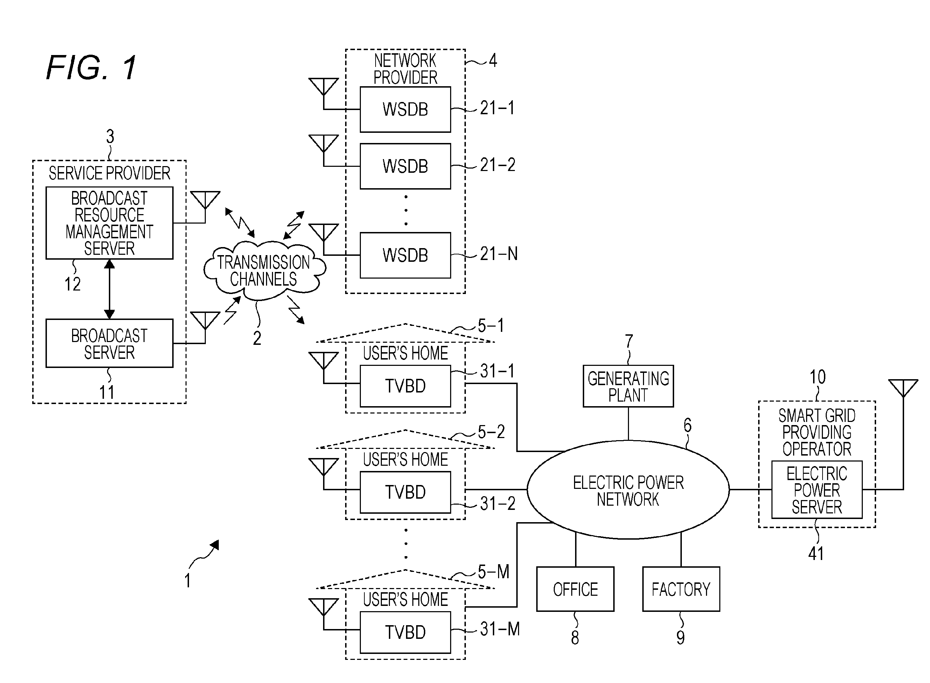

Fig. 1 shows a configuration of an embodiment of a content delivery system according to the present technology.

A content delivery system 1 includes a broadcast server 11, a broadcast resource management server 12, WSDBs 21-1 to 21-N, and TVBDs 31-1 to 31-M. Users' houses 5-1 to 5-M in which the TVBDs 31-1 to 31-M are disposed are connected to an electric power network 6 via electric power lines. To the electric power network 6, an electric power station 7, an office 8, a factory 9, and an electric power control server 41 are also connected.

The broadcast server 11 is a dedicated server for delivering content. The broadcast server 11 is disposed within the facility of a service provider 3. The service provider 3 is an operator who provides the service of delivering content, such as television programs and movies.

The broadcast server 11 acquires content to be delivered, and requests a delivery schedule for the content from the broadcast resource management server 12.

The broadcast resource management server 12 is a dedicated server for managing content delivery. The broadcast resource management server 12 is disposed within the facility of the service provider 3. The broadcast server 11 and the broadcast resource management server 12 are disposed in the same facility, for example, and communicate in a wired or wireless manner according to a predetermined communication system to exchange various data.

The broadcast resource management server 12, in response to the request from the broadcast server 11, enquires the WSDBs 21-1 to 21-N via transmission channels 2 about a frequency band utilization status on a time band basis.

The WSDBs 21-1 to 21-N (N: 1, 2, ..., N) are dedicated servers for managing information about the frequency utilization status on a time band basis in each region (hereafter referred to as "frequency utilization status information") by using a white space database (WSDB). The WSDBs 21-1 to 21-N are disposed in the facility of a network provider 4. The network provider 4 is an operator who provides the frequency utilization status information.

The WSDBs 21-1 to 21-N, in response to the inquiry from the broadcast resource management server 12, notifies the broadcast resource management server 12 of the frequency utilization status information via the transmission channels 2.

The broadcast resource management server 12, on the basis of the frequency utilization status information notified by the WSDBs 21-1 to 21-N, determines the content delivery schedule and notifies the broadcast server 11. The broadcast resource management server 12 also notifies the TVBDs 31-1 to 31-M of the content delivery schedule via the transmission channels 2.

The broadcast server 11, on the basis of the delivery schedule notified by the broadcast resource management server 12, delivers the content to the TVBDs 31-1 to 31-M by broadcasting via the transmission channels 2.

The TVBDs 31-1 to 31-M (M: 1, 2, ..., M) are terminal apparatuses (reception apparatuses) referred to as TV band devices (TVBD), which performs reproduction or storing of the delivered content. The TVBDs 31-1 to 31-M are disposed in the respective users' houses 5-1 to 5-M and used therein.

The TVBDs 31-1 to 31-M, on the basis of the delivery schedule notified by the broadcast resource management server 12, make preparations for receiving the content delivery and enter a content reception-enabled state. The TVBDs 31-1 to 31-M, upon delivery of the content from the broadcast server 11, receive the content and reproduce or store the content.

The users' houses 5-1 to 5-M are connected via electric power lines to the electric power network 6, and electronic devices in the users' houses, such as the TVBDs, are operated with electric power from the electric power network 6.

The electric power network 6 is an electric power supply system (electric power system) referred to as a "smart grid", in which a measuring device with artificial intelligence and a communication function is disposed to provide the function for autonomously controlling electric power demand such that electric power demand can be optimized without human intervention. The smart grid, which aims to achieve energy saving and cost reduction and an increase in reliability and transparency, is gaining increasing attention in various countries in the world and its practical application is under way.

To the electric power network 6, an electric power substation, a transformer, and the like (not shown) are also connected in addition to the electric power station 7 via electric power lines, and the electric power generated by the electric power station 7 is supplied via the electric power substation, the transformer, and the like to the electric power demanding facilities, such as the users' houses 5-1 to 5-M, the office 8, and the factory 9.

The electric power control server 41 is a dedicated server for monitoring the amount of electric power generated by the electric power station 7 in the electric power network 6 and the load on the electric power demanding equipment such as the users' houses 5-1 to 5-M, and for controlling electric power in accordance with the result of monitoring. The electric power control server 41 is disposed in the facility of the operator 10 providing the smart grid.

The electric power control server 41 also receives information about electric power supply amount and electric power supply time (hereafter referred to as "electric power supply information"), which is notified by the TVBDs 31-1 to 31-M via the transmission channels 2 and which is required when receiving the content. The electric power control server 41, on the basis of the notified electric power supply information, evaluates the feasibility of electric power supply to the TVBDs 31-1 to 31-M, and notifies, via the transmission channels 2, the broadcast resource management server 12 of the result of evaluation of the feasibility of electric power supply.

While not shown in the drawings for the sake of simplifying description, the broadcast server 11, the broadcast resource management server 12, and the WSDBs 21 are also connected via electric power lines to the electric power network 6, and are operated with the electric power from the electric power network 6. Thus, the communications between the electric power control server 41 and the TVBD 31 or the broadcast resource management server 12 may be conducted not only via the transmission channels 2 but also via the electric power network 6 by the so-called electric power line communications (PLC).

The content delivery system 1 shown in Fig. 1 is configured as described above.

In the following description, when it is not necessarily required to distinguish among the WSDBs 21-1 to 21-N, they will be referred to as "the WSDB 21". When it is not necessarily required to distinguish among the TVBDs 31-1 to 31-M, they will be referred to as "the TVBD 31". When it is not necessarily required to distinguish among the users' houses 5-1 to 5-M, they will be referred to as "the user's house 5".

### [Configuration of each apparatus]

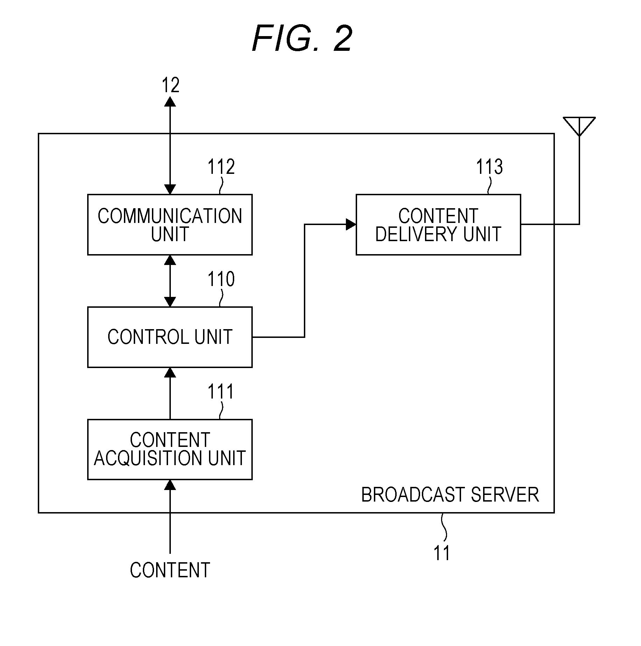

Next, with reference to Figs. 2 to 6, the detailed configuration of each of the broadcast server 11, the broadcast resource management server 12, the WSDB 21, the TVBD 31, and the electric power control server 41 constituting the content delivery system 1 of Fig. 1 will be described.

### [Configuration of broadcast server]

Fig. 2 shows a configuration example of the broadcast server 11 of Fig. 1.

The broadcast server 11 includes a control unit 110, content acquisition unit 111, a communication unit 112, and a content delivery unit 113.

The control unit 110 controls the operation of various parts of the broadcast server 11.

The content acquisition unit 111 acquires content to be delivered to the TVBD 31 by broadcasting, and supplies the content to the control unit 110.

When the content is supplied from the content acquisition unit 111, the control unit 110 supplies a request for a delivery schedule for the content to the communication unit 112.

The communication unit 112 transmits the request for the delivery schedule supplied from the control unit 110 to the broadcast resource management server 12. The communication unit 112 receives the delivery schedule transmitted from the broadcast resource management server 12 in response to the request for the delivery schedule, and supplies the delivery schedule to the control unit 110.

The control unit 110, on the basis of the delivery schedule supplied from the communication unit 112, carries out scheduling of a delivery process. The control unit 110 supplies the content acquired by the content acquisition unit 111 to the content delivery unit 113 in a time band for delivering the content.

The content delivery unit 113 delivers the content supplied from the control unit 110 to the TVBDs 31-1 to 31-M by broadcasting via the transmission channels 2, using a frequency band for delivering the content.

The broadcast server 11 is configured as described above.

### [Configuration of broadcast resource management server]

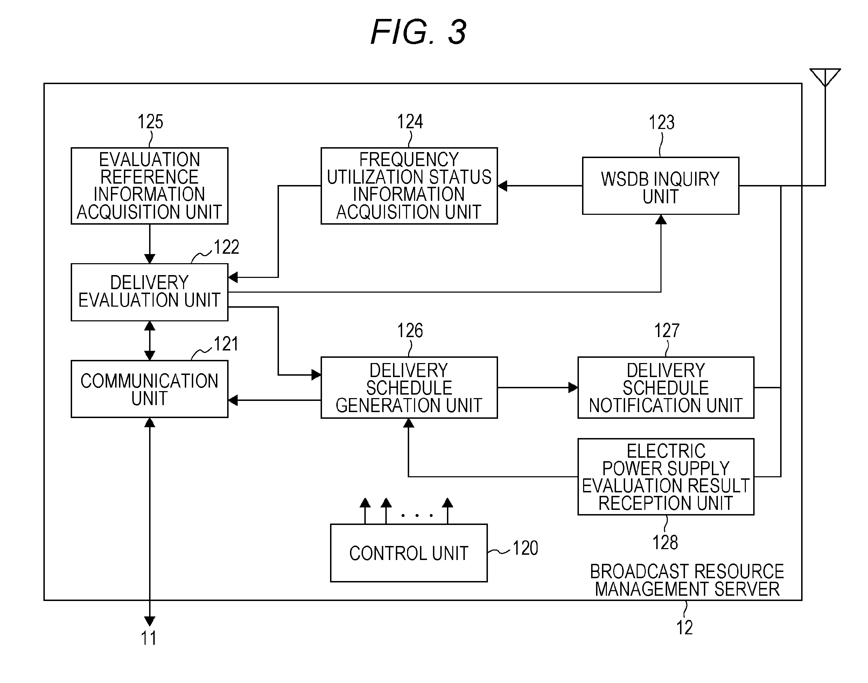

Fig. 3 shows a configuration example of the broadcast resource management server 12 of Fig. 1.

The broadcast resource management server 12 includes a control unit 120, a communication unit 121, a delivery evaluation unit 122, a WSDB inquiry unit 123, a frequency utilization status information acquisition unit 124, an evaluation reference information acquisition unit 125, a delivery schedule generation unit 126, a delivery schedule notification unit 127, and an electric power supply evaluation result reception unit 128.

The control unit 120 controls the operation of various parts of the broadcast resource management server 12.

The communication unit 121 receives the delivery schedule request transmitted from the broadcast server 11, and supplies the request to the delivery evaluation unit 122.

The delivery evaluation unit 122, when the delivery schedule request is supplied from the communication unit 121, instructs the WSDB inquiry unit 123 to inquire the WSDB 21.

The WSDB inquiry unit 123, in response to the instruction from the delivery evaluation unit 122, queries the WSDBs 21-1 to 21-N via the transmission channels 2 for the frequency utilization status information. The WSDB inquiry unit 123, in response to the query, supplies the frequency utilization status information notified by each of the WSDBs 21-1 to 21-N to the frequency utilization status information acquisition unit 124.

The frequency utilization status information acquisition unit 124 acquires the frequency utilization status information supplied from the WSDB inquiry unit 123, and supplies the information to the delivery evaluation unit 122.

The evaluation reference information acquisition unit 125 acquires evaluation reference information and supplies the information to the delivery evaluation unit 122.

The evaluation reference information is information as a reference for evaluation at the time of a delivery evaluation process carried out by the delivery evaluation unit 122. For example, the evaluation reference information is set in advance by a content provider providing the delivery content, such as a content production company, a broadcast station, and an individual. The evaluation reference information may be held by the broadcast resource management server 12. Alternatively, the evaluation reference information may be acquired simultaneously with the content delivered by the broadcast server 11.

The delivery evaluation unit 122 is supplied with the frequency utilization status information from the frequency utilization status information acquisition unit 124, and the evaluation reference information from the evaluation reference information acquisition unit 125, as well as the delivery schedule request supplied from the communication unit 121.

The delivery evaluation unit 122, on the basis of the frequency utilization status information and the evaluation reference information, carries out a delivery evaluation process for evaluating a time band for delivering the content for which the delivery schedule has been requested (hereafter referred to as a "delivery time band"), and a frequency band utilized for the delivery (hereafter referred to as a "delivery frequency band"). The delivery evaluation unit 122 supplies a delivery evaluation result obtained by the delivery evaluation process to the WSDB inquiry unit 123 and the delivery schedule generation unit 126.

The WSDB inquiry unit 123, on the basis of the delivery evaluation result supplied from the delivery evaluation unit 122, notifies the WSDBs 21-1 to 21-N via the transmission channels 2 of information for reserving the delivery time band and the delivery frequency band as a reservation block. When the content delivery is completed, the WSDB inquiry unit 123 notifies the WSDBs 21-1 to 21-N via the transmission channels 2 of information for releasing the reservation block.

The delivery schedule generation unit 126, on the basis of the delivery evaluation result supplied from the delivery evaluation unit 122, generates a delivery schedule and supplies the schedule to the communication unit 121 and the delivery schedule notification unit 127.

The communication unit 121 transmits the delivery schedule supplied from the delivery schedule generation unit 126 to the broadcast server 11.

The delivery schedule notification unit 127 notifies the TVBDs 31-1 to 31-M via the transmission channels 2 of the delivery schedule supplied from the delivery schedule generation unit 126.

The electric power supply evaluation result reception unit 128 receives the evaluation result concerning the electric power supply feasibility notified by the electric power control server 41 via the transmission channels 2, and supplies the evaluation result to the delivery schedule generation unit 126. When the electric power line communication with the electric power control server 41 is performed, the evaluation result concerning the electric power supply feasibility that has been notified via the electric power network 6 is received.

The delivery schedule generation unit 126, on the basis of the evaluation result concerning the electric power supply feasibility supplied from the electric power supply evaluation result reception unit 128, regenerates a delivery schedule in which one or both of the delivery time band and the frequency band are modified, and supplies the regenerated delivery schedule to the communication unit 121 and the delivery schedule notification unit 127.

The communication unit 121 transmits the delivery schedule regenerated by the delivery schedule generation unit 126 to the broadcast server 11. The delivery schedule notification unit 127 notifies the TVBDs 31-1 to 31-M of the delivery schedule regenerated by the delivery schedule generation unit 126 via the transmission channels 2.

The broadcast resource management server 12 is configured as described above.

### [Configuration of WSDB]

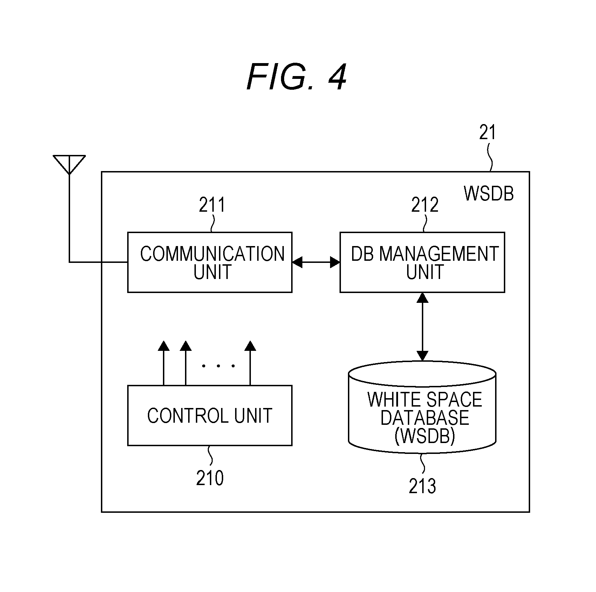

Fig. 4 shows a configuration example of the WSDB 21 of Fig. 1.

The WSDB 21 includes a control unit 210, a communication unit 211, a DB management unit 212, and a WSDB 213.

The control unit 210 controls the operation of various parts of the WSDB 21. By controlling the communication unit 211 and the DB management unit 212, the control unit 210 collects information concerning a frequency and a time band that are available in a predetermined region under management, and registers the information in the white space data base (WSDB) 213.

The communication unit 211 receives from the broadcast resource management server 12 the query for the frequency utilization status information notified via the transmission channels 2, and supplies the query to the DB management unit 212.

The DB management unit 212, in response to the query supplied from the communication unit 211, refers to the WSDB 213 and acquires the frequency utilization status information. The DB management unit 212 supplies the frequency utilization status information to the communication unit 211.

The communication unit 211 notifies, via the transmission channels 2, the broadcast resource management server 12 of the frequency utilization status information supplied from the DB management unit 212.

The communication unit 211, when notified by the broadcast resource management server 12 of a reservation block or the releasing of the reservation block via the transmission channels 2, supplies the notification to the DB management unit 212.

The DB management unit 212, in response to the notification supplied from the communication unit 211, refers to the WSDB 213 and carries out a process of registering the reservation block or releasing the reservation block.

The WSDB 21 is configured as described above.

### [Configuration of TVBD]

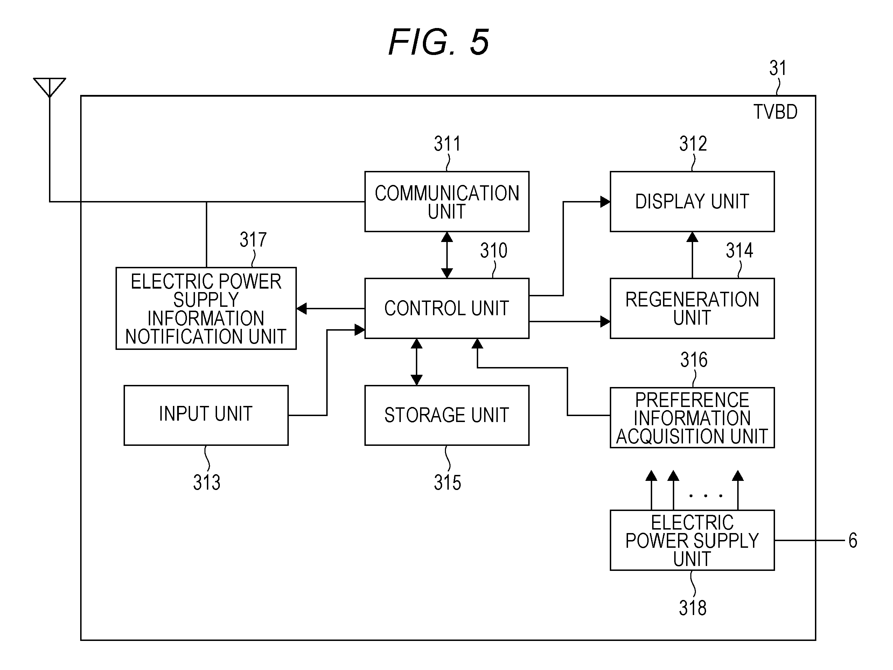

Fig. 5 shows a configuration example of the TVBD 31 of Fig. 1.

The TVBD 31 includes a control unit 310, a communication unit 311, a display unit 312, an input unit 313, a reproduction unit 314, a storage unit 315, a preference information acquisition unit 316, an electric power supply information notification unit 317, and an electric power supply unit 318.

The control unit 310 controls the operation of various parts of the TVBD 31.

The communication unit 311 receives from the broadcast resource management server 12 the delivery schedule notified via the transmission channels 2, and supplies the delivery schedule to the control unit 310.

The control unit 310, on the basis of the delivery schedule supplied from the communication unit 311, carries out a reception process scheduling. The control unit 310 displays the scheduling result on the display unit 312.

The control unit 310 selects, on the basis of an operation signal from the input unit 313, a desired content from among the content planned for delivery. The control unit 310 also selects the desired content based on preference information acquired by the preference information acquisition unit 316.

The preference information includes a user viewing history, for example, which may be held by the TVBD 31 or acquired from an external apparatus before a process of selecting the desired content is carried out.

The control unit 310, when it is immediately before the delivery time band for the desired content, activates and controls the TVBD 31 into a state such that the desired content can be received.

The communication unit 311 receives the content delivered from the broadcast server 11 by broadcasting via the transmission channels 2 and supplies the content to the control unit 310.

The control unit 310, when reproducing the content supplied from the communication unit 311, supplies the content to the reproduction unit 314. In this case, the reproduction unit 314 reproduces the content supplied from the control unit 310 in real-time, and causes the display unit 312 to display the content. When the content supplied from the communication unit 311 is stored, the control unit 310 supplies the content to the storage unit 315 to be stored therein. In this case, the stored content is reproduced by the reproduction unit 314.

The electric power supply information notification unit 317, in accordance with the control by the control unit 310, generates electric power supply information, which is information concerning an electric power supply amount required when receiving the content selected by the reception process scheduling and an electric power supply time, and notifies the electric power control server 41 via the transmission channels 2. When the electric power line communication with the electric power control server 41 is performed, the electric power supply information is notified via the electric power network 6.

The electric power supply unit 318 is connected via an electric power line to the electric power network 6, and supplies electric power from the electric power network 6 to various parts of the TVBD 31.

The TVBD 31 is configured as described above.

### [Configuration of electric power control server]

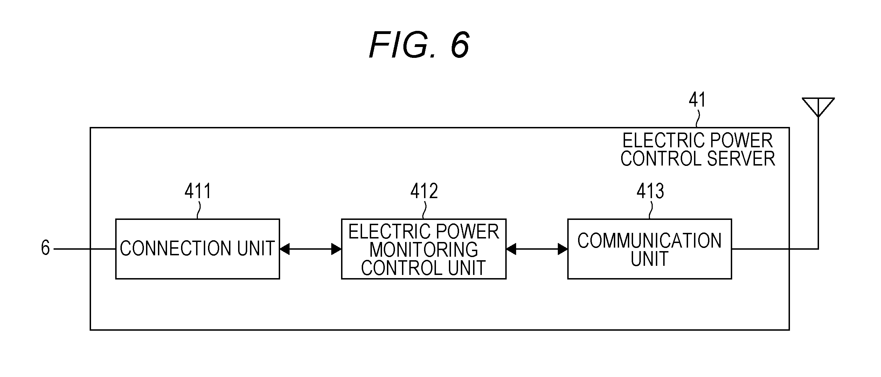

Fig. 6 shows a configuration example of the electric power control server 41 of Fig. 1.

The electric power control server 41 includes a connection unit 411, an electric power monitoring control unit 412, and a communication unit 413.

The electric power monitoring control unit 412 monitors, via the connection unit 411, the amount of electric power generated by the electric power station 7 in the electric power network 6, and the load on the electric power demanding equipment, such as the user's house 5, the office 8, and the factory 9, and implements electric power control in accordance with the result of monitoring.

The communication unit 413 receives the electric power supply information notified by the TVBD 31 via the transmission channels 2, and supplies the information to the electric power monitoring control unit 412.

The electric power monitoring control unit 412, on the basis of the electric power supply information supplied from the communication unit 413, performs scheduling of electric power supply. The electric power monitoring control unit 412, on the basis of the result of scheduling of electric power supply, evaluates the feasibility of electric power supply to the TVBD 31, and supplies the result of electric power supply feasibility to the communication unit 413.

The communication unit 413 notifies, via the transmission channels 2, the broadcast resource management server 12 of the result of electric power supply feasibility supplied from the electric power monitoring control unit 412.

When the electric power line communication with the TVBD 31 or the broadcast resource management server 12 is performed, the electric power supply information or the electric power supply feasibility result is exchanged via the electric power network 6.

The electric power control server 41 is configured as described above.

### [Content delivery process]

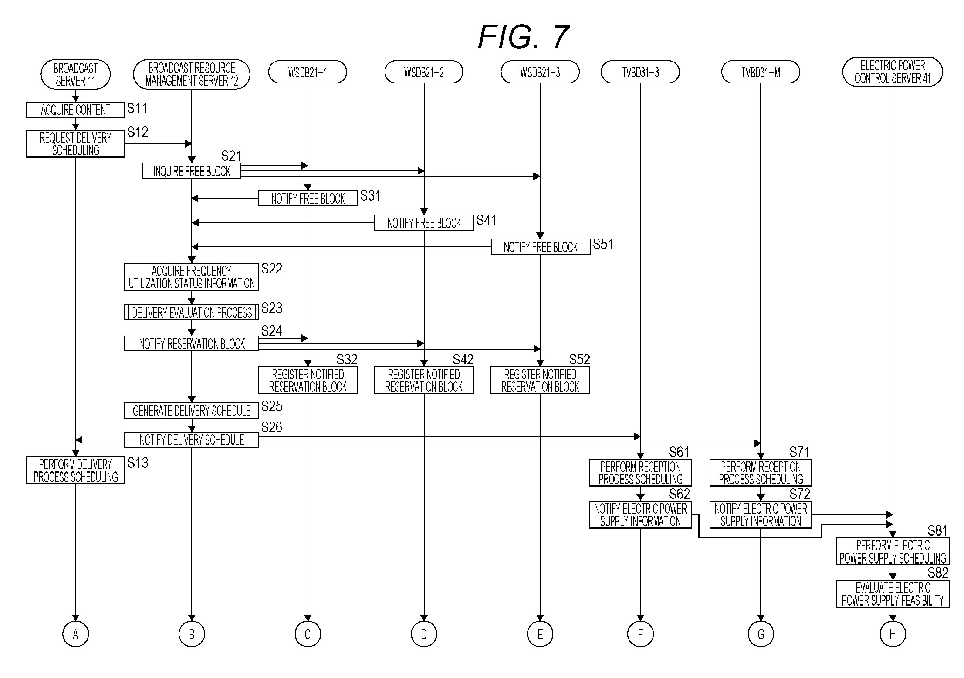

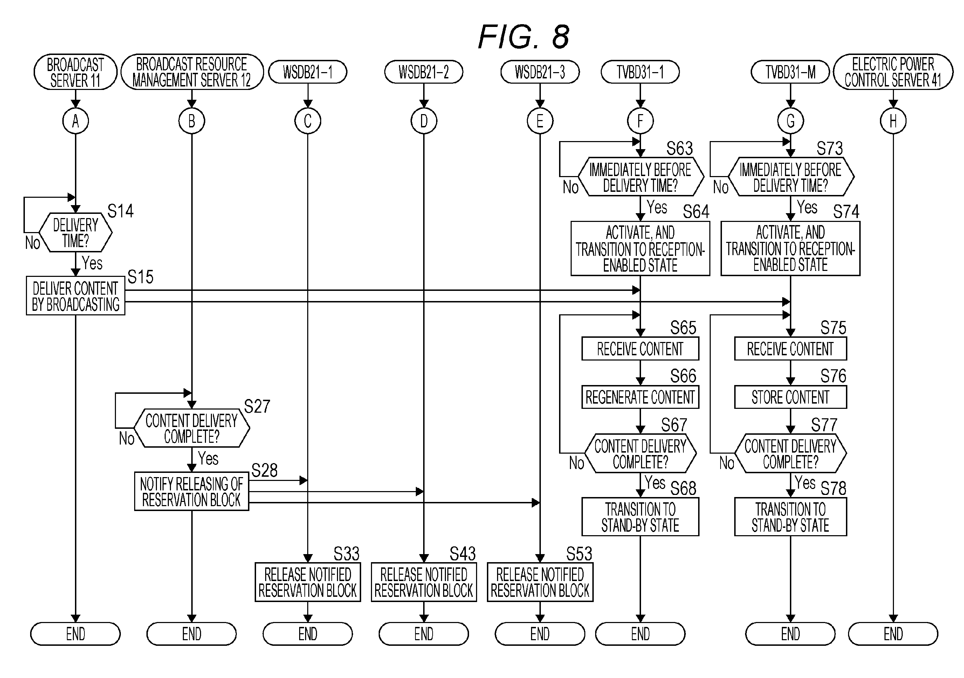

Next, with reference to the flowchart of Figs. 7 and 8, a content delivery process carried out in the content delivery system 1 of Fig. 1 will be described.

In the following, for the sake of simplifying description, it is assumed that the TVBDs 31-1 to 31-M are present in a region under the management of the WSDBs 21-1 to 21-3. In the flowchart of Figs. 7 and 8, the TVBD 31-1 and the TVBD 31-M from among the TVBDs 31-1 to 31-M will be described as representative examples.

In the broadcast server 11, when the content is acquired by the content acquisition unit 111 (step S11), the control unit 110 requests the broadcast resource management server 12 for a delivery schedule (step S12).

The content acquired by the content acquisition unit 111 is offered by the content provider, such as a content production company, a broadcast station, or an individual, via a terminal apparatus, a recording medium, and the like.

In the broadcast resource management server 12, when the delivery schedule is requested from the broadcast server 11, the WSDB inquiry unit 123 queries each of the WSDBs 21-1 to 21-3 about a free block of time band and frequency band via the transmission channels 2 (step S21).

In step S31, the DB management unit 212 of the WSDB 21-1 refers to the WSDB 213 and identifies a free block on the basis of the frequency band utilization status in each time band in the region that the DB management unit 212 manages, and notifies the broadcast resource management server 12 of the frequency utilization status information corresponding to the free block. Similarly in the WSDB 21-2 and the WSDB 21-3, a free block is identified in each region, and the broadcast resource management server 12 is notified of the corresponding frequency utilization status information (steps S41 and S51).

In the broadcast resource management server 12, the frequency utilization status information from the WSDBs 21-1 to 21-3 is acquired by the frequency utilization status information acquisition unit 124 (step S22). Then, in step S23, the delivery evaluation unit 122, on the basis of the frequency utilization status information acquired by the frequency utilization status information acquisition unit 124, carries out the delivery evaluation process.

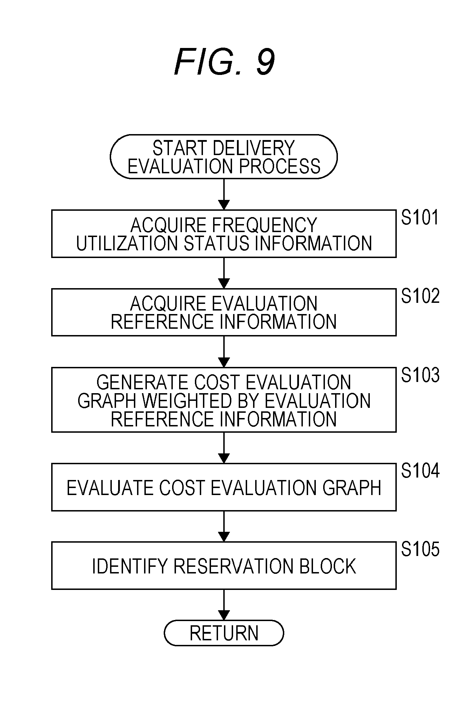

With reference to the flowchart of Fig. 9, the details of the delivery evaluation process corresponding to step S23 of Fig. 7 will be described.

The delivery evaluation unit 122 acquires the frequency utilization status information acquired by the frequency utilization status information acquisition unit 124, and the evaluation reference information acquired by the evaluation reference information acquisition unit 125 (steps S101 and S102).

In step S103, the delivery evaluation unit 122, on the basis of the acquired frequency utilization status information and evaluation reference information, generates a cost evaluation graph weighted by the evaluation reference information. The delivery evaluation unit 122 evaluates the generated cost evaluation graph (step S104), and identifies the reservation block in accordance with the result of delivery evaluation (step S105).

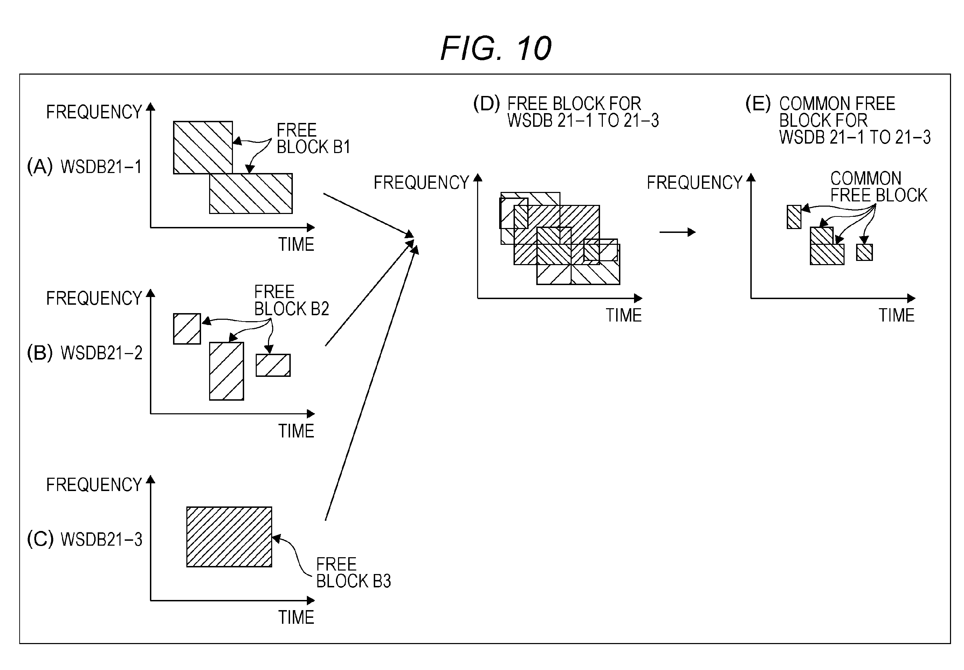

With reference to Figs. 10 to 13, the details of a cost evaluation graph evaluation method will be described.

As shown in Fig. 10(A) to (C), when the free blocks B1 to B3 notified with the frequency utilization status information acquired from the WSDBs 21-1 to 21-3 are expressed in a time-frequency plane, the area of the time band and frequency band identified by the free block B differs for each WSDB 21. The reason is that, as described above, because the region in which the frequency band utilization status is managed in each time band varies from one WSDB 21 to another, the vacant time band or frequency band differs in each region.

When the planes shown in Fig. 10(A) to (C) are expressed in a single plane in an overlapping manner, as shown in Fig. 10(D), the result consists of an area in which all of the free blocks B1 to B3 are overlapping; an area in which the free blocks B1 and B2 are overlapping; an area in which the free blocks B1 and B3 are overlapping; an area in which the free blocks B2 and B3 are overlapping; and areas in which only the free block B1, B2, or B3 is exclusively present. When the areas in which all of the free blocks B1 to B3 are overlapping are extracted, as shown in Fig. 10(E), four common free blocks are obtained. These common free blocks provide frequency bands that can be commonly utilized in a common time band in all of the regions under the management of the WSDBs 21-1 to 21-3.

Namely, the broadcast server 11 can deliver the content by broadcasting in the delivery time band in the common free block areas shown in Fig. 10(E) by utilizing the delivery frequency band corresponding to the delivery time band. The content delivered by broadcasting is delivered to the TVBDs 31-1 to 31-M present in the region under the management of the WSDBs 21-1 to 21-3.

When the time band and frequency band in the common free block areas are evaluated, the evaluation may be conducted after weighting the free block areas. For example, for an area in which the content can be expected to be viewed by more viewers, such as in the time band of 19:00 to 22:00 on Sunday, the free block utilization cost is set higher. On the other hand, for an area in which the viewers are expected to be less, such as in a time band early in the morning or late at night, the free block utilization cost is set lower.

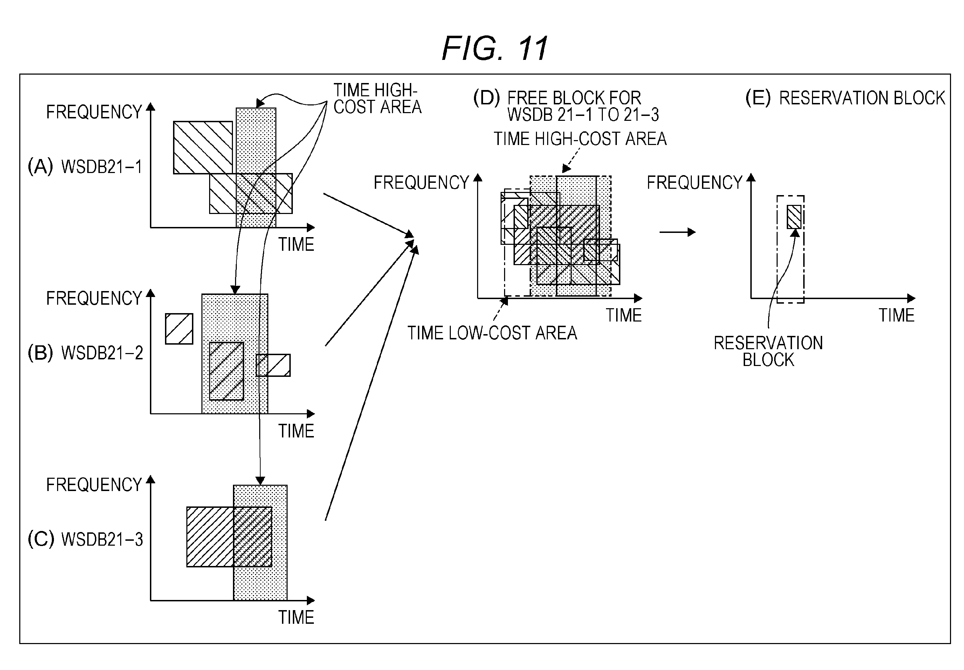

For example, as shown in Fig. 11(A) to (C), with respect to the graphs showing the free blocks B1 to B3 of Fig. 10(A) to (C) on the time-frequency plane, an area with increased utilization cost (hereafter referred to as a "time high-cost area") in which viewing by more viewers can be expected can be set for each WSDB 21.

When the planes shown in Fig. 11(A) to (C) are represented on a single plane in an overlapping manner, as shown in Fig. 11(D), the time high-cost areas are further overlapped with the overlapping free blocks B1 to B3. Namely, of the common free block areas, a high cost is expected for the common free blocks in the time high-cost area, while a low cost is expected for the common free blocks in an area outside the time high-cost areas (hereafter referred to as a "time low-cost area").

The evaluation reference information includes a cost parameter indicating whether priority should be given to the common free blocks belonging to the time high-cost area or those belonging to the time low-cost area.

For example, when the cost parameter indicates priority to the time low-cost area, as shown in Fig. 11(E), the common free block in the time low-cost area is selected as a reservation block. While Fig. 11(E) shows the case in which the time low-cost area is given priority, the common free block in the time high-cost area is selected as the reservation block when the cost parameter indicates priority to the time high-cost area.

The free block utilization cost may be set depending on the bit rate for content delivery, i.e., the frequency band cost, in addition to the time band such as date and time.

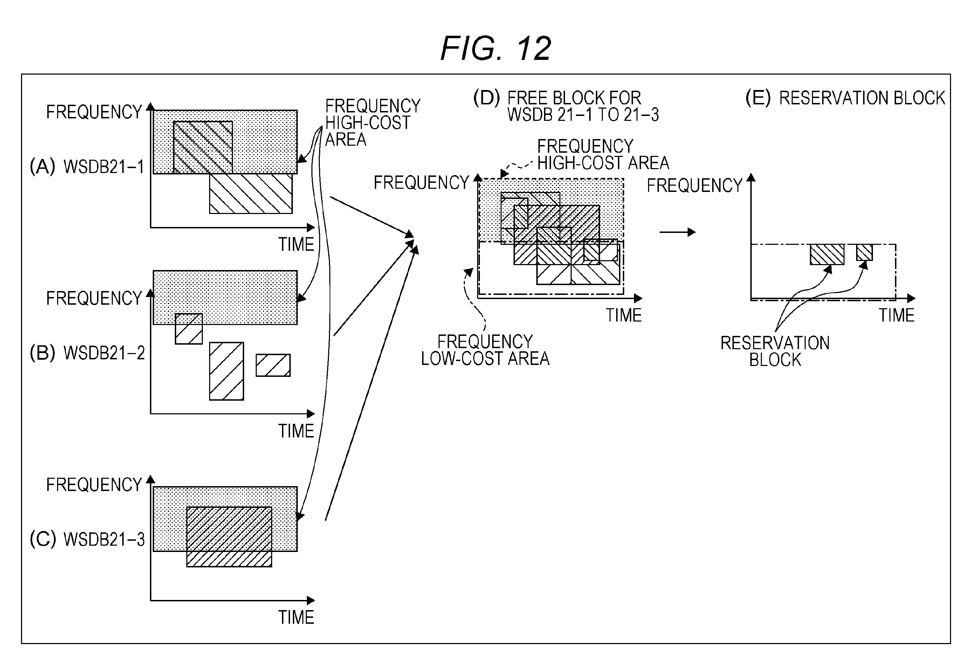

For example, as shown in Fig. 12(A) to (C), with respect to the graphs showing the free blocks B1 to B3 each on the time-frequency plane, an area in which a high delivery bit rate is expected and the utilization cost is high (hereafter referred to as a "frequency high-cost area") can be set for each WSDB 21.

When the planes shown in Fig. 12(A) to (C) are shown on a single plane in an overlapping manner, as shown in Fig. 12(D), with respect to the overlapping free blocks B1 to B3, the frequency high-cost areas are further overlapped. Namely, of the common free blocks, a high cost is expected for the common free blocks in the frequency high-cost area, while a low cost is expected for the common free blocks in the area in which the utilization cost is low (hereafter referred to as a "frequency low-cost area") outside the frequency high-cost area.

The evaluation reference information includes, as a cost parameter, a parameter indicating whether priority should be given to the common free blocks belonging to the frequency high-cost area or to those belonging to the frequency low-cost area, in addition to the above-described parameter concerning the time cost area priority.

For example, when the cost parameter indicates priority to the frequency low-cost area, as shown in Fig. 12(E), the common free blocks in the frequency low-cost area are selected as reservation blocks. While Fig. 12(E) shows the case in which priority is given to the frequency low-cost area, when the cost parameter indicates priority to the frequency high-cost area, the common free blocks in the frequency high-cost area are selected as the reservation blocks.

The time costs illustrated in Fig. 11 may be combined with the frequency costs illustrated in Fig. 12, and the reservation block may be selected from the common free blocks in accordance with the combination of the time cost and the frequency cost. Such combinations may be utilized in a case, for example, in which the time cost may be maximized while the frequency cost is desired to be minimized.

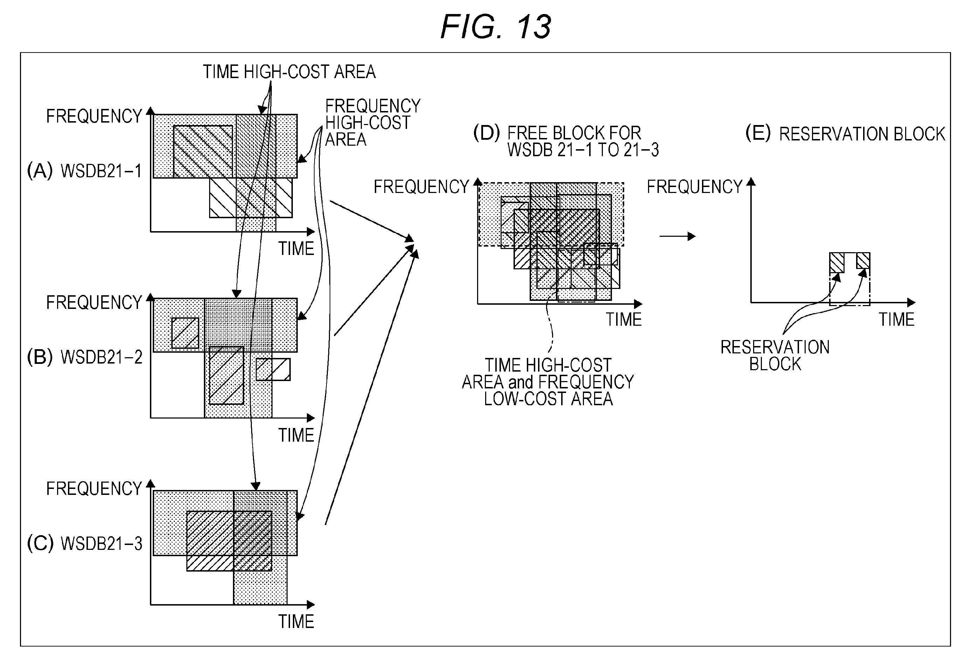

For example, as shown in Fig. 13(A) to (C), with respect to the graphs showing the free blocks B1 to B3 each on a time-frequency plane, the time high-cost area and the frequency high-cost may be set.

When the planes shown in Fig. 13(A) to (C) are shown on a single plane in an overlapping manner, as shown in Fig. 13(D), the time high-cost area and the frequency high-cost area are further overlapped on the overlapping free blocks B1 to B3. Namely, of the common free blocks, a high cost is expected in the common free blocks in the time high-cost area or the frequency high-cost area, while a low cost is expected in the common free blocks in the time low-cost area or the frequency low-cost area.

For example, when the cost parameter indicates priority to the time high-cost area and to the frequency low-cost area, as shown in Fig. 13(E), the common free blocks in the time high-cost area and in the frequency low-cost area are selected as reservation blocks.

While Fig. 13(E) shows the case in which the time high-cost area and the frequency low-cost area are given priority, when the cost parameter indicates priority to the time high-cost area and to the frequency high-cost area, the common free blocks that are in the time high-cost area and that are in the frequency high-cost area are selected as reservation blocks. Also, when priority is given to the time low-cost area and to the frequency low-cost area, or when priority is given to the time low-cost area and to the frequency high-cost area, the common free blocks in the prioritized area are selected as reservation blocks.

Thus, in the delivery evaluation unit 122, evaluation is performed after the weighting with the parameter indicating whether priority is given to the common free blocks belonging to one or both of the time high-cost area and the time low-cost area, or to those belonging to one or both of the frequency high-cost area and the frequency low-cost area, and then the reservation blocks are identified.

As described above, the cost parameter is set in advance by the content provider, such as the content production company, as evaluation reference information.

Accordingly, the content provider can set the content delivery condition (such as the delivery time band or the delivery frequency band) from the viewpoint of whether, in light of budgets, for example, the content should be viewed by more viewers or delivered at higher bit rate. As a result, the content provider can deliver the desired content within the budgets and under the best delivery condition.

Referring back to the flowchart of Fig. 9, when the process of step S105 is completed, the process is further returned to the flowchart of Fig. 7 and the process of step S23 and thereafter is carried out.

In step S24, the WSDB inquiry unit 123 notifies, via the transmission channels 2, each of the WSDBs 21-1 to 21-3 of the reservation block identified by the delivery evaluation process.

In step S32, the DB management unit 212 of the WSDB 21-1 registers the reservation block notified by the broadcast resource management server 12 in the WSDB 213. Similarly in the WSDB 21-2 and the WSDB 21-3, the notified reservation block is registered in the WSDB 213.

Thus, in each WSDB 21, the time band and frequency band corresponding to the reservation block are ensured for content delivery by the broadcast server 11, and cannot be used for delivering other content.

Meanwhile, in the broadcast resource management server 12, the delivery schedule is generated by the delivery schedule generation unit 126 on the basis of the reservation block identified by the delivery evaluation process (step S25).

The delivery schedule is delivery information for the content delivered in the delivery time band and delivery frequency band allocated to the reservation block, and includes a file storing metadata (manifest file), for example. For example, in the delivery schedule (delivery information), information about the content planned to be delivered in each delivery time band and delivery frequency band, such as the title, genre, outline, and purchase price of the content, is stored as the metadata.

The broadcast server 11 is notified of the generated delivery schedule by the communication unit 121. The TVBDs 31-1 to 31-M are also notified, via the transmission channels 2, of the generated delivery schedule by the delivery schedule notification unit 127 (step S26).

When notified of the delivery schedule, in the broadcast server 11, scheduling of the delivery process is performed by the control unit 110 (step S13). The scheduling includes making a plan based on the notified delivery schedule for delivering the content by broadcasting using the delivery frequency band in the delivery time band.

The broadcast server 11 stands by until the delivery time band as determined by the control unit 110 ("Yes" in step S14 of Fig. 8).

Meanwhile, in the TVBDs 31-1, when notified of the delivery schedule, the control unit 310 carries out scheduling of a reception process (step S61). The reception process scheduling includes making a plan, on the basis of the notified delivery schedule, for achieving a state such that the desired content delivered from the broadcast server 11 can be received by using the delivery frequency band in the delivery time band.

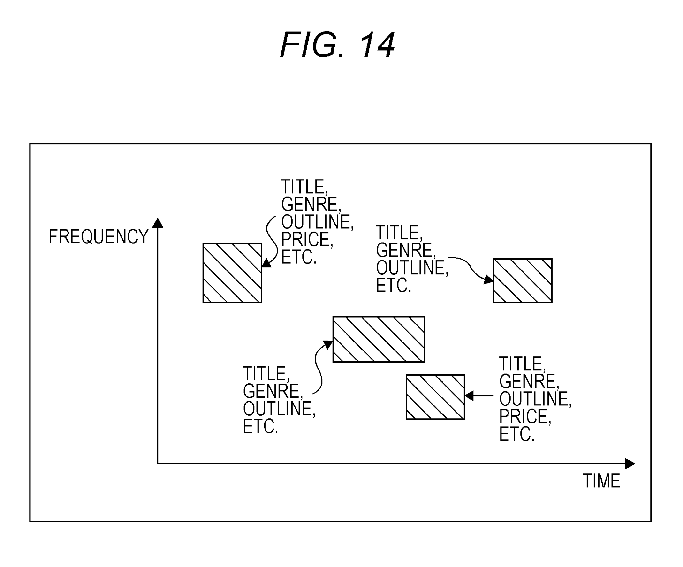

For example, the control unit 310, on the basis of the metadata of the content contained in the delivery schedule, displays a delivery plan chart on the display unit 312, the delivery plan chart showing information about each content planned for delivery, such as the title, genre, outline, and purchase price of the content on a time-frequency plane, as shown in Fig. 14. The user confirms the delivery plan chart displayed on the display unit 312 and selects the desired content he or she wishes to view from among the content planned for delivery, by operating the input unit 313.

The delivery plan chart of Fig. 14 is an example of the screen display for enabling the user to select the content to be delivered. The delivery plan chart may be based on other display methods, such as in the form of an electronic program guide (EPG) that can be utilized on the TVBD 31, or radio and television listings on the newspaper.

The control unit 310, on the basis of user preference information acquired by the preference information acquisition unit 316, may carry out a process of determining by analogy the content from among the content planned for delivery that matches the preference of the user using the TVBDs 31-1, and regard the determined content as the content that the user wishes to view. In this case, the user does not need to select the desired content. Further, as the preference information, the user viewing history and the like may be used, in which case the content of a genre or with a title corresponding to the viewing history is selected.

When the reception process scheduling is completed, the process returns to the flowchart of Fig. 7. In step S62, the electric power supply information notification unit 317 notifies, via the transmission channels 2 or the electric power network 6, the electric power control server 41 of electric power supply information including information about the electric power supply amount and the electric power supply time for receiving the content selected by the reception process scheduling.

The TVBD 31-1 stands by until immediately before the delivery time band as determined by the control unit 310 (such as several minutes before delivery) ("Yes" in step S63 of Fig. 8).

Similarly, in the TVBDs 31-2 to 31-M, upon notification of the delivery schedule, the reception process scheduling is carried out. The scheduling involves making a plan for enabling the reception of the desired content from the broadcast server 11 by utilizing the delivery frequency band in the delivery time band (step S71). Further, the electric power control server 41 is notified, via the transmission channels 2 or the electric power network 6, of the electric power supply information in accordance with the reception process scheduling (step S72). The TVBDs 31-2 to 31-M stands by until immediately before the delivery time band as determined ("Yes" in step S73 of Fig. 8).

The electric power supply information notified by the TVBDs 31-1 to 31-M via the transmission channels 2 or the electric power network 6 is received by the communication unit 413 or the connection unit 411 of the electric power control server 41. In the electric power control server 41, electric power supply scheduling based on the electric power supply information is carried out by the electric power monitoring control unit 412 (step S81). By the scheduling, a plan for the electric power amount required in the delivery time band for each content planned for delivery is made, for example.

In step S82, the electric power monitoring control unit 412 evaluates the feasibility of electric power supply to the TVBDs 31-1 to 31-M in the delivery time band on the basis of the result of electric power supply scheduling.

Namely, by the electric power supply scheduling, an expected value of the total amount of electric power consumed by the TVBDs 31-1 to 31-M in the delivery time band is determined. Thus, when the total amount of electric power consumed is not more than a predetermined electric power amount, the electric power monitoring control unit 412 evaluates that electric power can be supplied to the TVBDs 31-1 to 31-M, for example. On the other hand, when the total amount of electric power consumed is more than the predetermined electric power amount, it is evaluated that electric power cannot be supplied to the TVBDs 31-1 to 31-M.

Further, the electric power monitoring control unit 412 monitors the amount of electric power generated by the electric power station 7 and the load on the electric power demanding equipment, such as the user's house 5 and the office 8. Thus, when there is surplus electric power supply in view of their electric power demand and supply, for example, it may be evaluated that electric power supply is possible even when the expected value of the total amount of electric power consumed by the TVBDs 31-1 to 31-M is large. Conversely, when there is no electric power supply surplus, it may be evaluated that electric power supply is impossible even when the expected value of the total amount of electric power consumed by the TVBDs 31-1 to 31-M is small.

Thus, the feasibility of electric power supply to the TVBDs 31-1 to 31-M is evaluated by the electric power monitoring control unit 412, and when it is evaluated that electric power supply is possible, electric power to the TVBDs 31-1 to 31-M from the electric power network 6 in the delivery time band is ensured. On the other hand, when it is evaluated by the electric power monitoring control unit 412 that electric power supply is impossible, electric power to the TVBDs 31-1 to 31-M from the electric power network 6 in the delivery time band cannot be ensured. Hereafter, in the content delivery process illustrated in Figs. 7 and 8, the case in which electric power supply to the TVBDs 31-1 to 31-M in the delivery time band is ensured by the evaluation of the electric power supply feasibility will be described.

Thereafter, when it is determined that the time is immediately before the delivery time band ("Yes" in step S63; "Yes" in S73), the TVBDs 31-1 to 31-M are activated by the electric power from the respective electric power supply unit 318 in accordance with the control by the respective control unit 310. Then, the TVBDs 31-1 to 31-M transition from the stand-by state to the state enabling the reception of the desired content (steps S64, S74). Namely, it can be said that, from the viewpoint of the broadcast server 11 and the broadcast resource management server 12, the TVBDs 31-1 to 31-M enter a state enabling delivery according to the delivery schedule.

On the other hand, in the broadcast server 11, when it is determined that the time is the delivery time band ("Yes" in step S14), the process goes onto step S15. In step S15, the content delivery unit 113 delivers the content acquired by the content acquisition unit 111 to the TVBDs 31-1 to 31-M by broadcasting using the delivery frequency band.

At this time, because the TVBDs 31-1 to 31-M are already activated and in the reception-enabled state, the content delivered from the broadcast server 11 is received by the communication unit 311 (steps S65, S75).

In the TVBD 31-1, the content received by the reproduction unit 314 is reproduced and displayed on the display unit 312. As described above, the delivered content may not be reproduced in real-time. For example, in the TVBD 31-M among the TVBDs 31-2 to 31-M, the received content is stored by the storage unit 315.

In this way, the users of the TVBDs 31-1 to 31-M can view the desired content or store the content and view it later.

Thereafter, the control unit 310 determines whether the content delivery by the broadcast server 11 has been completed. When it is determined that the content delivery is not completed ("No" in step S67; "No" in S77), the process returns to steps S65 and S75. Then, the process of receiving the content and reproducing or storing the content is carried out by the broadcast server 11 until content delivery is completed.

When it is determined that the content delivery is completed ("Yes" in step S67; "Yes" in S77), the control unit 310 causes the state of the TVBD 31 to transition from the reception-enabled state to the stand-by state. Thus, in the TVBDs 31-1 to 31-M, the process of content reception and reproduction or storage is completed.

In the broadcast resource management server 12, when the content delivery is completed ("Yes" in step S27), the process goes onto step S28. In step S28, the WSDB inquiry unit 123 notifies each of the WSDBs 21-1 to 21-3 via the transmission channels 2 of the releasing of the reservation block that has been used for content delivery.

In step S33, the DB management unit 212 of the WSDB 21-1 releases the reservation block that has been registered in the WSDB 213 in accordance with the notification by the broadcast resource management server 12. Similarly, in the WSDB 21-2 and WSDB 21-3, the reservation block that has been registered in the WSDB 213 is released (steps S43, S53). Thus, the time band and frequency band corresponding to the reservation block are released in each WSDB 21 and become available for delivering other content.

As described above, in the content delivery system 1, when content is delivered, the frequency utilization status information managed in the WSDB 21 is acquired, and the delivery time band and delivery frequency band for the delivered content are evaluated on the basis of the frequency utilization status information. Then, the TVBDs 31-1 to 31-M in the region under the management of the WSDB 21 are notified of the delivery schedule. Further, when the electric power supply to the TVBDs 31-1 to 31-M is ensured, the content is delivered by broadcasting to the TVBDs 31-1 to 31-M that have been placed in the reception-enabled state according to the delivery schedule.

Thus, electric power supply to the TVBDs 31-1 to 31-M is ensured only when there is electric power demand surplus, such as when the total amount of electric power consumed by the TVBDs 31-1 to 31-M in the delivery time band is not more than the predetermined electric power amount. Accordingly, the TVBDs 31-1 to 31-M are placed in the reception-enabled state when content delivery is performed, so that the load on the electric power system at the time of content delivery can be decreased.

Further, when predetermined content is delivered by broadcasting, the TVBD 31 of the user wishing to view the content is activated without fail, so that the concurrent simultaneous reception performance can be improved. As a result, broadcast delivery characteristics can be fully exploited, and the efficiency of delivering information, such as content, can be increased.

When the delivery time band and the delivery frequency band are evaluated, the evaluation is conducted after weighting in accordance with the time band or frequency band, so that, from the viewpoint of the content provider, the content can be delivered in a delivery time band and at a bit rate commensurate with the cost that the provider can afford. Thus, the information delivery efficiency can be increased in accordance with the delivery cost, whereby the content delivery cost-effectiveness can be increased.

### [Delivery schedule re-notification process]

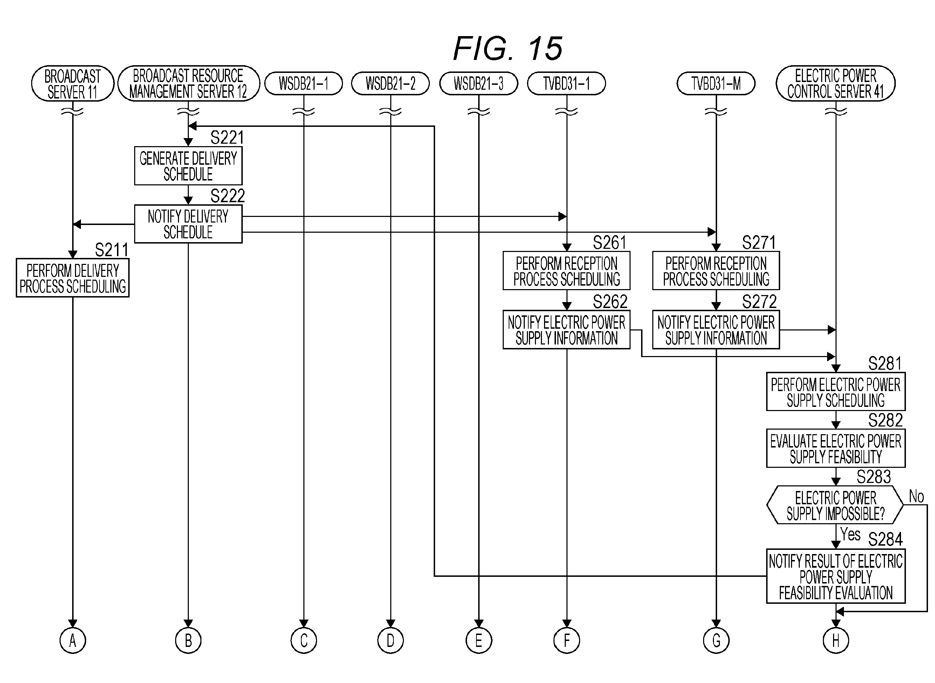

Next, with reference to the flowchart of Fig. 15, a delivery schedule re-notification process will be described in a case in which electric power supply to the TVBDs 31-1 to 31-M cannot be ensured by the electric power supply feasibility evaluation process by the electric power monitoring control unit 412 (step S82 in Fig. 7).

The process according to the flowchart of Fig. 15 is partially omitted with regard to the process overlapping with the flowchart of Fig. 7, and corresponds to the process in which, after step S24 of Fig. 7 is carried out, the reservation block is registered in each of the WSDBs 21-1 to 21-3.

Namely, in step S221, as in step S25 of Fig. 7, a delivery schedule is generated by the delivery schedule generation unit 126 on the basis of the reservation block identified by the delivery evaluation process. The delivery schedule is notified to the broadcast server 11 by the communication unit 121, as in step S26 of the Fig. 7, and also to the TVBDs 31-1 to 31-M by the delivery schedule notification unit 127 via the transmission channels 2 (step S222).

In the broadcast server 11, when notified of the delivery schedule, delivery process scheduling is performed by the control unit 110 (step S211) as in step S13 of Fig. 7. The broadcast server 11 stands by until the delivery time band as determined by the control unit 110.

Meanwhile, in the TVBDs 31-1 to 31-M, when notified of the delivery schedule, reception process scheduling is performed by the control unit 310, as in steps S61 and S71 of Fig. 7 (steps S261, S271). When the reception process scheduling is completed, in the TVBDs 31-1 to 31-M, the electric power supply information in accordance with the reception process scheduling is notified to the electric power control server 41 via the transmission channels 2 or the electric power network 6, as in steps S62 and S72 of Fig. 7 (steps S262, S272).

The electric power supply information notified from the TVBDs 31-1 to 31-M via the transmission channels 2 or the electric power network 6 is received by the electric power control server 41. In the electric power control server 41, as in steps S81 and S82 of Fig. 7, electric power supply scheduling based on the electric power supply information is performed, and the feasibility of electric power supply to the TVBDs 31-1 to 31-M in the delivery time band is evaluated on the basis of the result of the scheduling (steps S281, S282).

In step S283, the electric power monitoring control unit 412 determines whether electric power can be supplied to the TVBDs 31-1 to 31-M on the basis of the evaluation result concerning the electric power supply feasibility.

If it is determined in step S283 that electric power cannot be supplied, the process goes onto step S284. In step S284, the communication unit 413, in accordance with the control by the electric power monitoring control unit 412, notifies the broadcast resource management server 12 of the evaluation result concerning the electric power supply feasibility via the transmission channels 2 or the electric power network 6.

The evaluation result concerning the electric power supply feasibility notified from the electric power control server 41 via the transmission channels 2 or the electric power network 6 is received by the electric power supply evaluation result reception unit 128 of the broadcast resource management server 12. Then, the process of step S221 is carried out again, and a delivery schedule is regenerated by the delivery schedule generation unit 126.

The delivery schedule regeneration process involves, for example, repeating the evaluation of the cost evaluation graph generated by the delivery evaluation process as described above (step S23 of Fig. 7). Namely, while the evaluation of the cost evaluation graph as described above with reference to Figs. 10 to 13 involves selecting a reservation block from the common free blocks, in the present case, a reservation block different from the previously selected reservation block is selected. Then, the delivery schedule generation unit 126 regenerates the delivery schedule on the basis of the newly identified reservation block. In this case, in the WSDBs 21-1 to 21-3, the reservation block that has been registered previously is released and the reservation block that has been newly selected this time is registered.

For example, the cost evaluation graph itself may be regenerated. In this case, after the previously registered reservation block of the WSDBs 21-1 to 21-3 is released, each of the WSDBs 21-1 to 21-3 is queried about a free block, as in steps S21 and S22 of Fig. 7, and the frequency utilization status information is acquired. Then, the delivery evaluation unit 122 regenerates the cost evaluation graph that is based on the frequency utilization status information and the evaluation reference information and that is weighted by the evaluation reference information, as in step S23 of Fig. 7. In this way, evaluation of the regenerated cost evaluation graph is conducted, and a reservation block different from the previously selected reservation block is selected. Thereafter, the delivery schedule generation unit 126 regenerates the delivery schedule on the basis of the newly identified reservation block.

A target value of the total amount of electric power consumed by the TVBDs 31-1 to 31-M in the delivery time band may be included in the evaluation result notified from the electric power control server 41 concerning the electric power supply feasibility, for example, so that the delivery schedule corresponding to the target value can be regenerated.

By regenerating the delivery schedule thus, for example, the delivery time band is shifted compared with the previous delivery schedule and the viewers of the content are reduced, whereby the number of the TVBDs 31 that are activated is decreased. Thus, it can be expected that the electric power demand in the delivery time band can be satisfied. Further, for example, it is also possible that the electric power demand in the delivery time band is satisfied by the delivery time band shifting to a time band with less electric power demand. Further, for example, by lowering the delivery bit rate, the viewers who expect high image quality content may be discouraged from viewing.

The regenerated delivery schedule is notified again to the broadcast server 11 by the communication unit 121, while also notified again to the TVBDs 31-1 to 31-M by the delivery schedule notification unit 127 via the transmission channels 2 (step S222).

In the broadcast server 11, when notified of the delivery schedule again, the delivery process scheduling is again performed by the control unit 110 (step S211), and the broadcast server 11 stands by until the delivery time band.

Meanwhile, in the TVBDs 31-1 to 31-M, when notified of the delivery schedule again, the reception process scheduling is performed in the TVBDs 31-1 to 31-M again (steps S261, S271), and electric power supply information in accordance with the reception process scheduling is notified to the electric power control server 41 again (steps S262, S272).

The electric power supply information notified from the TVBDs 31-1 to 31-M again is received by the electric power control server 41. Then, the electric power monitoring control unit 412 again performs the electric power supply scheduling based on the electric power supply information (step S281), and the feasibility of electric power supply to the TVBDs 31-1 to 31-M in the delivery time band is evaluated again (step S282).

When it is determined by the re-evaluation of the electric power supply feasibility that electric power cannot be supplied to the TVBDs 31-1 to 31-M ("Yes" in step S283), the process again goes onto step S284. Namely, the delivery schedule regeneration process as described above is repeated until the electric power supply to the TVBDs 31-1 to 31-M in the delivery time band is ensured.

On the other hand, when the electric power supply to the TVBDs 31-1 to 31-M in the delivery time band is ensured in the re-evaluation of the electric power supply feasibility ("No" in step S283), the process of step S284 is skipped. In this case, the broadcast resource management server 12 is not notified of the evaluation result concerning the electric power supply feasibility, the delivery schedule is finalized, and the TVBDs 31-1 to 31-M stand by until immediately before the delivery time band in accordance with the reception process scheduling.

The subsequent process corresponds to the flowchart of Fig. 8 and therefore its description will be omitted. The TVBDs 31-1 to 31-M are activated immediately before the delivery time band and receive the content delivered by broadcasting from the broadcast server 11.

As described above, the delivery schedule is regenerated until electric power supply to the TVBDs 31-1 to 31-M is ensured, whereby the load on the electric power system during content delivery can be decreased and the content can be reliably delivered.

### <2. Second embodiment>

### [Another configuration of content delivery system]

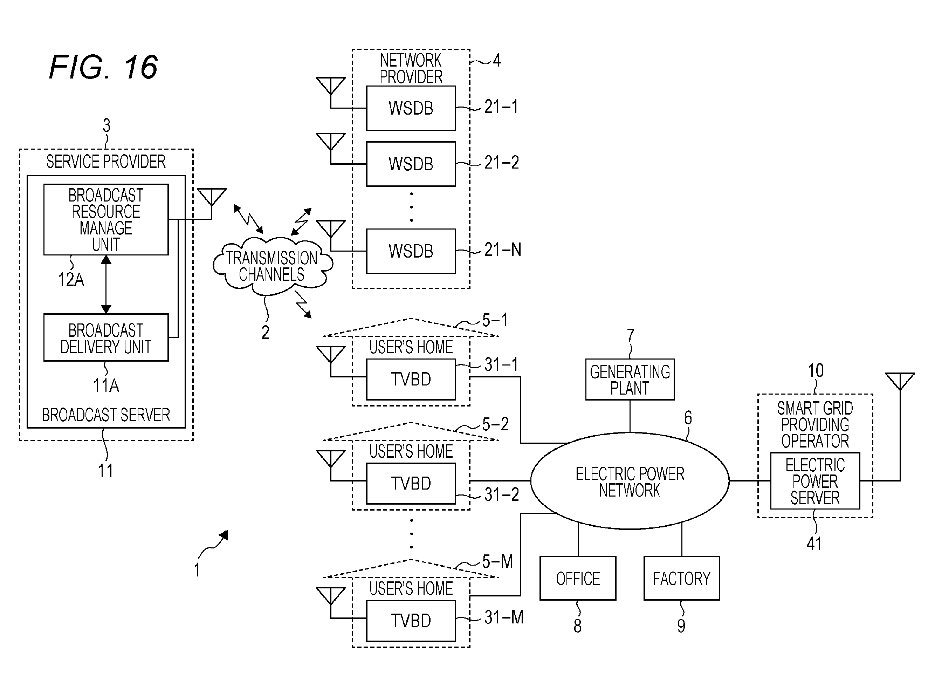

Fig. 16 shows another configuration of the embodiment of the content delivery system according to the present technology.

While the broadcast server 11 and the broadcast resource management server 12 have been described as being independent apparatuses with reference to Fig. 1, these apparatuses may be considered to constitute the single broadcast server 11, as shown in Fig. 16.

Namely, the broadcast server 11 of Fig. 16 is a single apparatus including a broadcast delivery unit 11A as a processing unit corresponding to the broadcast server 11 of Fig. 1, and a broadcast resource management unit 12A as a processing unit corresponding to the broadcast resource management server 12 of Fig. 1. The broadcast server 11 of Fig. 16 is disposed in the facility of the service provider 3.

The broadcast delivery unit 11A includes the control unit 110 to the content delivery unit 113 of Fig. 2. The operation of the control unit 110 of Fig. 2 to the content delivery unit 113 is as described above.

The broadcast resource management unit 12A includes the control unit 120 to the electric power supply evaluation result reception unit 128 of Fig. 3. The operation of the control unit 120 to the electric power supply evaluation result reception unit 128 of Fig. 3 is as described above.

Thus the content delivery system 1 of Fig. 16 is configured as described above.

### <3. Third embodiment>

### [Another configuration of content delivery system]

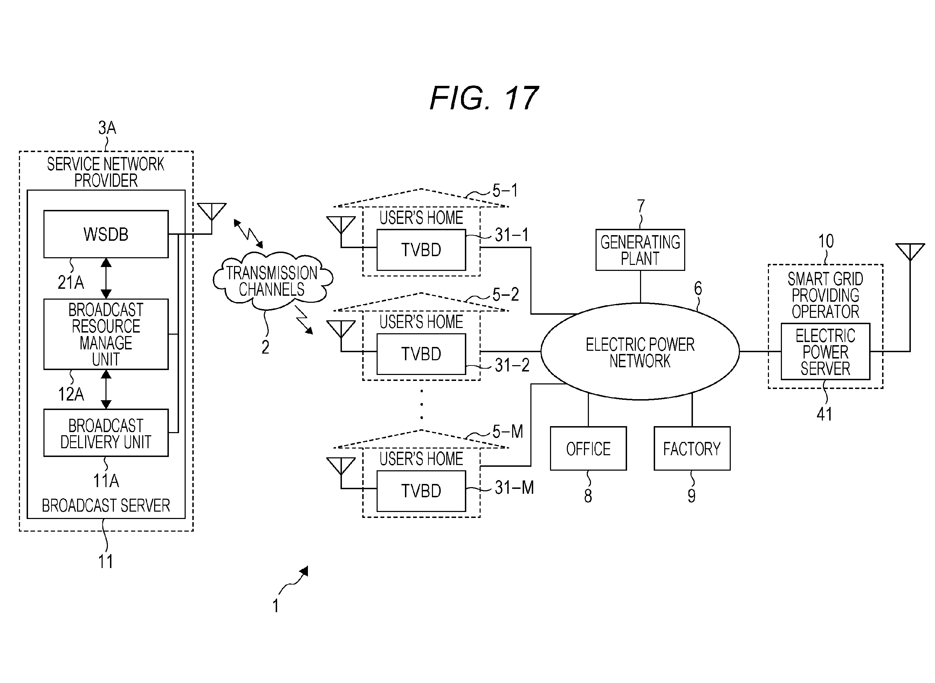

Fig. 17 shows yet another configuration of the embodiment of the content delivery system according to the present technology.

While the broadcast server 11, the broadcast resource management server 12, and the WSDBs 21-1 to 21-N have been described as being independent apparatuses with reference to Fig. 1, these apparatuses may be considered to constitute the single broadcast server 11, as shown in Fig. 17.

Namely, the broadcast server 11 of Fig. 17 is a single apparatus including a WSDB 21A as a processing unit corresponding to the WSDB 21, in addition to the broadcast delivery unit 11A and the broadcast resource management unit 12A of Fig. 17. The broadcast server 11 of Fig. 17 is disposed in the facility of a service/network provider 3A. The service/network provider 3A is an operator providing both content delivery service and frequency utilization status information.

The WSDB 21A includes the control unit 210 to the WSDB 213 of Fig. 4. The operation of the control unit 210 to the WSDB 213 of Fig. 4 is as described above.

Thus the content delivery system 1 of Fig. 17 is configured as described above.

### <4. Modification>

In the foregoing description, an example has been described in which both time and frequency as evaluation reference information are weighted with the two stages of cost of "low" and "high". However, the weighting is not limited to the two stages, and may be based on three stages of "low", "middle", and "high", or more than three stages, such as four stages of "level 1", "level 2", "level 3", and "level 4", for example.

With regard to the content delivery by the broadcast server 11, the content may be delivered not just by broadcasting such as television broadcasting, but also by other communication systems, such as the Internet. The "communication" herein may include not only wireless communication or wired communication but also communication in which wireless communication and wired communication are mixed such that wireless communication is performed in one section and wired communication is performed in another section. The communication may also include communication such that communication from one apparatus to another apparatus is conducted via wired communication, while communication from the other apparatus to a certain apparatus is conducted via wireless communication.

In the foregoing description, the electric power supply information of which the electric power control server 41 is notified is notified by the TVBDs 31-1 to 31-M. However, the electric power supply information may be notified by the broadcast resource management server 12. In this case, the broadcast resource management server 12 notifies the electric power supply information based on the delivery schedule to the electric power control server 41 via the transmission channels 2, so that the TVBD 31 does not need to notify the electric power supply information.

### [Description of computer to which the present technology is applied]

The series of processes described above may be performed by hardware or software. When the series of processes is performed by software, a program constituting the software is installed in a general-purpose computer and the like.

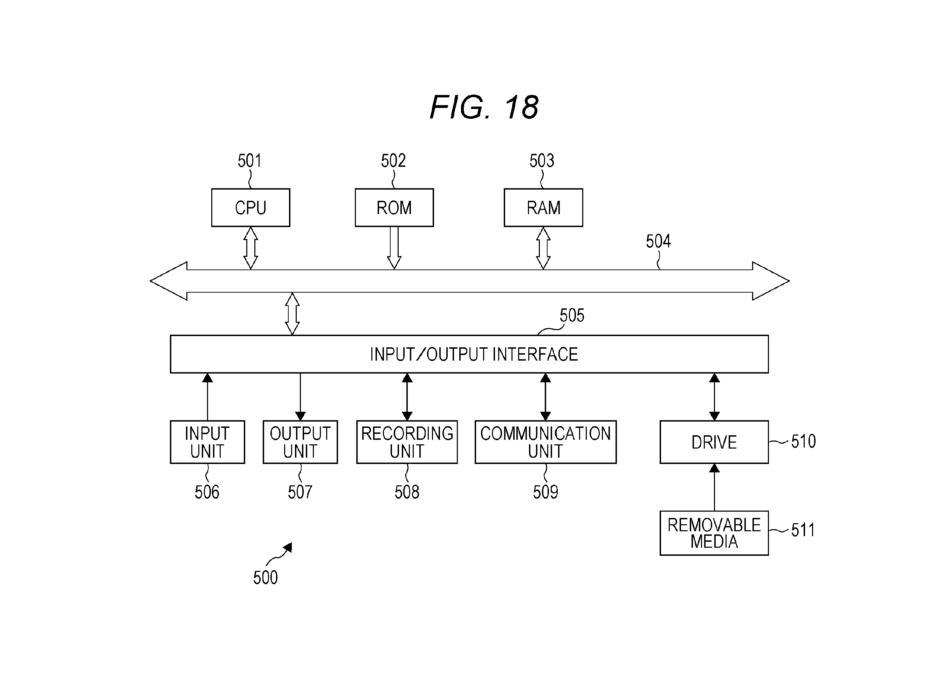

Fig. 18 shows a configuration example of an embodiment of a computer in which the program for executing the series of processes is installed.

The program may be recorded in a recording unit 508, such as a hard disk in a computer 500, or in a read only memory (ROM) 502 in advance.

Alternatively, the program may be stored (recorded), temporarily or permanently, in a removable medium 511, such as a flexible disc, a compact disc read only memory (CD-ROM), a magneto optical (MO) disk, a digital versatile disc (DVD), a magnetic disk, and a semiconductor memory. The removable medium 511 may be provided as so-called packaged software.

In addition to being installed in the computer 500 from the removable medium 511, the program may also be transferred from a download site via an artificial satellite for digital satellite broadcasting to the computer 500 wirelessly or in a wired manner via a network such as a local area network (LAN) or the Internet. In the computer 500, the transferred program is received by the communication unit 509 and can be then installed in the recording unit 508.

The computer 500 includes a central processing unit (CPU) 501. To the CPU 501, an input/output interface 505 is connected via a bus 504. The CPU 501, upon reception of a command inputted via the input/output interface 505 by a user operating an input unit 506, which may include a keyboard, a mouse, and a microphone, executes the program stored in the ROM 502 in accordance with the command. Alternatively, the CPU 501 may load a program stored in the recording unit 508, a program transferred from a satellite or a network, received by the communication unit 509 and then installed in the recording unit 508, or a program read from the removable medium 511 mounted on a drive 510 and installed in the recording unit 508 on a random access memory (RAM) 503 and then execute the program. In this way, the CPU 501 carries out a process according to the flowcharts described above, or a process according to the block diagrams described above. The CPU 501 then causes the result of processing to be outputted via an output unit 507 which may include a liquid crystal display (LCD) and a speaker, transmitted from a communication unit 509, or recorded in the recording unit 508 as needed via the input/output interface 505, for example.

In the present specification, the process steps describing a program for causing the computer to carry out various processes may not necessarily be processed chronologically in the order described in the form of a flowchart, and may include processes which are carried out in parallel or individually (such as parallel processes or object-based processes).

The program may be processed by a single computer, or processed in a distributed manner by a plurality of computers. The program may be transferred to a distant computer and executed thereby.

In the present specification, a "system" refers to an apparatus as a whole including a plurality of apparatuses.

The present technology is not limited to the foregoing embodiment, and various changed may be made without departing from the gist of the present technology.

Further, the present technology may include the following configurations.

[1] A reception apparatus including:
   an electric power supply information notification unit that, on the basis of content delivery information notified from an information delivery apparatus that delivers content by utilizing a delivery frequency band in a delivery time band, notifies electric power supply information including an electric power supply amount and an electric power supply time at the time of receiving the content to a monitoring control apparatus that monitors and controls electric power supply by an electric power system;
   a control unit that implements control on the basis of the notified delivery information such that a content reception-enabled state is achieved when the electric power supply in the delivery time band is ensured by an evaluation of electric power supply feasibility based on the electric power supply information by the monitoring control apparatus; and
   a content reception unit that receives the content delivered from the information delivery apparatus.
[2] The reception apparatus according to [1], wherein the electric power supply information notification unit notifies the monitoring control apparatus of the electric power supply information on the basis of delivery information re-notified from the information delivery apparatus when the electric power supply in the delivery time band cannot be ensured by the electric power supply feasibility evaluation based on the electric power supply information by the monitoring control apparatus.
[3] The reception apparatus according to [1] or [2], wherein:
   the control unit selects desired content from the content delivered from the information delivery apparatus on the basis of the notified delivery information; and
   the electric power supply information notification unit notifies the electric power supply information about the selected content.
[4] The reception apparatus according to any one of [1] to [3], wherein the control unit, on the basis of the delivery information of the selected content, activates the reception apparatus so as to achieve the content reception-enabled state immediately before delivery of the content from the information delivery apparatus.
[5] The reception apparatus according to any one of [1] to [4], wherein the delivery time band and the delivery frequency band are determined on the basis of frequency utilization status information concerning a frequency band utilization status in each time band in a predetermined region.
[6] A reception method including the steps of a reception apparatus:
   notifying, on the basis of delivery information notified from an information delivery apparatus that delivers content by utilizing a delivery frequency band in a delivery time band, a monitoring control apparatus of electric power supply information including an electric power supply amount and an electric power supply time at the time of receiving the content, the monitoring control apparatus monitoring and controlling electric power supply by an electric power system;
   implementing control based on the notified delivery information such that a content reception-enabled state is achieved when the electric power supply in the delivery time band is ensured by an evaluation of electric power supply feasibility based on the electric power supply information by the monitoring control apparatus; and
   receiving the content delivered from the information delivery apparatus.
[7] An information delivery apparatus including:
   a content acquisition unit that acquires content to be delivered;
   a frequency utilization status information acquisition unit that acquires frequency utilization status information concerning a frequency band utilization status in each time band in a predetermined region;
   a delivery evaluation unit that, on the basis of the acquired frequency utilization status information, evaluates a delivery time band for delivering the acquired content and a delivery frequency band utilized for the delivery;
   a delivery information notification unit that notifies a plurality of reception apparatuses in the region of delivery information about the content to be delivered by utilizing the delivery frequency band in the delivery time band;
   an electric power supply evaluation result reception unit that receives an evaluation result concerning the feasibility of electric power supply to the plurality of reception apparatuses in the delivery time band, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system; and
   a content delivery unit that, when the electric power supply in the delivery time band is ensured by the evaluation of the feasibility of electric power supply, delivers the acquired content to the plurality of reception apparatuses that are placed in a delivery-enabled state in accordance with the delivery information, by utilizing the delivery frequency band in the delivery time band,
   wherein the delivery information notification unit, when the electric power supply in the delivery time band cannot be ensured by the evaluation of the feasibility of electric power supply, notifies the plurality of reception apparatuses in the region of the delivery information with one or both of the delivery time band and the delivery frequency band modified.
[8] The information delivery apparatus according to [7], further including an evaluation reference information acquisition unit that acquires evaluation reference information as a reference for evaluating the delivery time band and the delivery frequency band,
   wherein the delivery evaluation unit evaluates the delivery time band and the delivery frequency band on the basis of the acquired evaluation reference information.
[9] The information delivery apparatus according to [8], wherein the evaluation reference information is a reference for highly evaluating the cost of a time band in which viewing of the content by more viewers can be expected, and for highly evaluating the cost of a frequency band in which a higher delivery bit rate for the content is expected.
[10] The information delivery apparatus according to [8] or [9], wherein the evaluation reference information is a reference for highly evaluating the cost of a time band in which viewing of the content by more viewers is expected.
[11] The information delivery apparatus according to any one of [8] to [10], wherein the evaluation reference information is a reference for highly evaluating the cost of a frequency band in which a higher delivery bit rate for the content is expected.
[12] The information delivery apparatus according to any one of [7] to [11], wherein the frequency utilization status information acquisition unit acquires the frequency utilization status information for each region from an information management apparatus that manages the frequency utilization status information for each region.
[13] The information delivery apparatus according to any one of [7] to [12], wherein:
   the information delivery apparatus includes a delivery apparatus and a management apparatus;
   the delivery apparatus includes the content acquisition unit and the content delivery unit; and
   the management apparatus includes the frequency utilization status information acquisition unit, the delivery evaluation unit, the delivery information notification unit, and the electric power supply evaluation result reception unit.
[14] An information delivery method including the steps of an information delivery apparatus:
   acquiring content to be delivered;
   acquiring frequency utilization status information concerning a frequency band utilization status in each time band in a predetermined region;
   evaluating, on the basis of the acquired frequency utilization status information, a delivery time band for delivering the acquired content and a delivery frequency band utilized for the delivery;
   notifying a plurality of reception apparatuses in the region of delivery information about the content to be delivered in the delivery time band by utilizing the delivery frequency band;
   receiving an evaluation result concerning the feasibility of electric power supply to the plurality of reception apparatuses in the delivery time band, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system;
   delivering, when the electric power supply in the delivery time band is ensured by the evaluation of the feasibility of electric power supply, the acquired content to the plurality of reception apparatuses that are placed in a delivery-enabled state in accordance with the delivery information, by utilizing the delivery frequency band in the delivery time band; and
   notifying, when the electric power supply in the delivery time band cannot be ensured by the evaluation of the feasibility of electric power supply, the delivery information with one or both of the delivery time band and the delivery frequency band modified to the plurality of reception apparatuses in the region.
[15] An information delivery system including:
   an information delivery apparatus;
   an information management apparatus;
   a plurality of reception apparatus; and
   a monitoring control apparatus that monitors and controls electric power supply by an electric power system,
   wherein the information delivery apparatus includes:
      a content acquisition unit that acquires content to be delivered;
      a frequency utilization status information acquisition unit that acquires the frequency utilization status information from the information management apparatus that manages frequency utilization status information concerning a frequency band utilization status in each time band in a predetermined region;
      a delivery evaluation unit that evaluates, on the basis of the acquired frequency utilization status information, a delivery time band for delivering the acquired content and a delivery frequency band utilized for the delivery; and
      a delivery information notification unit that notifies a plurality of the reception apparatuses in the region of delivery information about the content to be delivered by utilizing the delivery frequency band in the delivery time band,
   wherein each of the plurality of reception apparatuses includes an electric power supply information notification unit that notifies, on the basis of the delivery information notified from the information delivery apparatus, the monitoring control apparatus of electric power supply information including an electric power supply amount and an electric power supply time for receiving the content,
   wherein the monitoring control apparatus includes:
      an electric power supply evaluation unit that evaluates, on the basis of the electric power supply information notified from each of the plurality of reception apparatuses, the feasibility of electric power supply to the plurality of the reception apparatuses in the delivery time band; and
      an electric power supply result notification unit that notifies the information delivery apparatus of a result of evaluation of the feasibility of electric power supply,
   wherein the information delivery apparatus further includes:
      an electric power supply evaluation result reception unit that receives the electric power supply feasibility result notified from the monitoring control apparatus; and
      a content delivery unit that, when the electric power supply in the delivery time band is ensured by the electric power supply feasibility evaluation, delivers the acquired content to the plurality of reception apparatuses that are placed in a delivery-enabled state in accordance with the delivery information by utilizing the delivery frequency band in the delivery time band,
   wherein the delivery information notification unit notifies, when the electric power supply in the delivery time band cannot be ensured by the electric power supply feasibility evaluation, the plurality of reception apparatuses in the region of the delivery information with one or both of the delivery time band and the delivery frequency band modified,
   wherein each of the reception apparatuses further includes:
      a control unit that, when the electric power supply in the delivery time band is ensured by the electric power supply feasibility evaluation, implements control based on the notified delivery information such that a content reception-enabled state is achieved; and
      a content reception unit that receives the content delivered from the information delivery apparatus.

### REFERENCE SINGS LIST

- 1: Content delivery system
- 2: Transmission channel
- 6: Electric power network
- 11: Broadcast server
- 11A: Broadcast delivery unit
- 12: Broadcast resource management server
- 12A: Broadcast resource management unit
- 21, 21A, 21-1 to 21-N: WSDB
- 31, 31-1 to 31-M: TVBD
- 41: Electric power control server
- 110: Control unit
- 111: Content acquisition unit
- 112: Communication unit
- 113: Content delivery unit
- 120: Control unit
- 121: Communication unit
- 122: Delivery evaluation unit
- 123: WSDB inquiry unit
- 124: Frequency utilization status information acquisition unit
- 125: Evaluation reference information acquisition unit
- 126: Delivery schedule generation unit
- 127: Delivery schedule notification unit
- 128: Electric power supply evaluation result reception unit
- 210: Control unit
- 211: Communication unit
- 212: DB management unit
- 213: WSDB
- 310: Control unit
- 311: Communication unit
- 312: Display unit
- 313: Input unit
- 314: Reproduction unit
- 315: Storage unit
- 316: Preference information acquisition unit
- 317: Electric power supply information notification unit
- 318: Electric power supply unit
- 412: Electric power monitoring control unit
- 413: Communication unit
- 500: Computer
- 501: CPU

## Claims

1. A reception apparatus comprising:
an electric power supply information notification unit that, on the basis of content delivery information notified from an information delivery apparatus that delivers content by utilizing a delivery frequency band in a delivery time band, notifies a monitoring control apparatus of electric power supply information including an electric power supply amount and an electric power supply time at the time of receiving the content, the monitoring control apparatus monitoring and controlling electric power supply by an electric power system;
a control unit that implements control on the basis of the notified delivery information such that a content reception-enabled state is achieved when the electric power supply in the delivery time band is ensured by an evaluation of electric power supply feasibility based on the electric power supply information by the monitoring control apparatus; and
a content reception unit that receives the content delivered from the information delivery apparatus.

2. The reception apparatus according to claim 1, wherein the electric power supply information notification unit notifies the monitoring control apparatus of the electric power supply information on the basis of delivery information re-notified from the information delivery apparatus when the electric power supply in the delivery time band cannot be ensured by the electric power supply feasibility evaluation based on the electric power supply information by the monitoring control apparatus.

3. The reception apparatus according to claim 1, wherein:
the control unit selects desired content from the content delivered from the information delivery apparatus on the basis of the notified delivery information; and
the electric power supply information notification unit notifies the electric power supply information about the selected content.

4. The reception apparatus according to claim 3, wherein the control unit, on the basis of the delivery information of the selected content, activates the reception apparatus so as to achieve the content reception-enabled state immediately before delivery of the content from the information delivery apparatus.

5. The reception apparatus according to claim 4, wherein the delivery time band and the delivery frequency band are determined on the basis of frequency utilization status information concerning a frequency band utilization status in each time band in a predetermined region.

6. A reception method comprising the steps of a reception apparatus:
notifying, on the basis of delivery information notified from an information delivery apparatus that delivers content by utilizing a delivery frequency band in a delivery time band, a monitoring control apparatus of electric power supply information including an electric power supply amount and an electric power supply time at the time of receiving the content, the monitoring and control apparatus monitoring and controlling electric power supply by an electric power system;
implementing control based on the notified delivery information such that a content reception-enabled state is achieved when the electric power supply in the delivery time band is ensured by an evaluation of electric power supply feasibility based on the electric power supply information by the monitoring control apparatus; and
receiving the content delivered from the information delivery apparatus.

7. An information delivery apparatus comprising:
a content acquisition unit that acquires content to be delivered;
a frequency utilization status information acquisition unit that acquires frequency utilization status information concerning a frequency band utilization status in each time band in a predetermined region;
a delivery evaluation unit that, on the basis of the acquired frequency utilization status information, evaluates a delivery time band for delivering the acquired content and a delivery frequency band utilized for the delivery;
a delivery information notification unit that notifies a plurality of reception apparatuses in the region of delivery information about the content to be delivered by utilizing the delivery frequency band in the delivery time band;
an electric power supply evaluation result reception unit that receives an evaluation result concerning the feasibility of electric power supply to the plurality of reception apparatuses in the delivery time band, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system; and
a content delivery unit that, when the electric power supply in the delivery time band is ensured by the evaluation of the feasibility of electric power supply, delivers the acquired content to the plurality of reception apparatuses that are placed in a delivery-enabled state in accordance with the delivery information, by utilizing the delivery frequency band in the delivery time band,
wherein the delivery information notification unit, when the electric power supply in the delivery time band cannot be ensured by the evaluation of the feasibility of electric power supply, notifies the plurality of reception apparatuses in the region of the delivery information with one or both of the delivery time band and the delivery frequency band modified.

8. The information delivery apparatus according to claim 7, further comprising an evaluation reference information acquisition unit that acquires evaluation reference information as a reference for evaluating the delivery time band and the delivery frequency band,
wherein the delivery evaluation unit evaluates the delivery time band and the delivery frequency band on the basis of the acquired evaluation reference information.

9. The information delivery apparatus according to claim 8, wherein the evaluation reference information is a reference for highly evaluating the cost of a time band in which viewing of the content by more viewers can be expected, and for highly evaluating the cost of a frequency band in which a higher delivery bit rate for the content is expected.

10. The information delivery apparatus according to claim 8, wherein the evaluation reference information is a reference for highly evaluating the cost of a time band in which viewing of the content by more viewers is expected.

11. The information delivery apparatus according to claim 8, wherein the evaluation reference information is a reference for highly evaluating the cost of a frequency band in which a higher delivery bit rate for the content is expected.

12. The information delivery apparatus according to claim 7, wherein the frequency utilization status information acquisition unit acquires the frequency utilization status information for each region from an information management apparatus that manages the frequency utilization status information for each region.

13. The information delivery apparatus according to claim 7, wherein:
the information delivery apparatus includes a delivery apparatus and a management apparatus;
the delivery apparatus includes the content acquisition unit and the content delivery unit; and
the management apparatus includes the frequency utilization status information acquisition unit, the delivery evaluation unit, the delivery information notification unit, and the electric power supply evaluation result reception unit.

14. An information delivery method comprising the steps of an information delivery apparatus:
acquiring content to be delivered;
acquiring frequency utilization status information concerning a frequency band utilization status in each time band in a predetermined region;
evaluating, on the basis of the acquired frequency utilization status information, a delivery time band for delivering the acquired content and a delivery frequency band utilized for the delivery;
notifying a plurality of reception apparatuses in the region of delivery information about the content to be delivered in the delivery time band by utilizing the delivery frequency band;
receiving an evaluation result concerning the feasibility of electric power supply to the plurality of reception apparatuses in the delivery time band, wherein the feasibility is evaluated by the plurality of reception apparatuses in the region notifying a monitoring control apparatus of electric power supply information based on the delivery information and including an electric power supply amount and an electric power supply time at the time of receiving the content, the monitoring and controlling apparatus monitoring and controlling electric power supply by an electric power system;
delivering, when the electric power supply in the delivery time band is ensured by the evaluation of the feasibility of electric power supply, the acquired content to the plurality of reception apparatuses that are placed in a delivery-enabled state in accordance with the delivery information, by utilizing the delivery frequency band in the delivery time band; and
notifying, when the electric power supply in the delivery time band cannot be ensured by the evaluation of the feasibility of electric power supply, the delivery information with one or both of the delivery time band and the delivery frequency band modified to the plurality of reception apparatuses in the region.

15. An information delivery system comprising:
an information delivery apparatus;
an information management apparatus;
a plurality of reception apparatus; and
a monitoring control apparatus that monitors and controls electric power supply by an electric power system,
wherein the information delivery apparatus includes:
a content acquisition unit that acquires content to be delivered;
a frequency utilization status information acquisition unit that acquires the frequency utilization status information from the information management apparatus that manages frequency utilization status information concerning a frequency band utilization status in each time band in a predetermined region;
a delivery evaluation unit that evaluates, on the basis of the acquired frequency utilization status information, a delivery time band for delivering the acquired content and a delivery frequency band utilized for the delivery; and
a delivery information notification unit that notifies a plurality of the reception apparatuses in the region of delivery information about the content to be delivered by utilizing the delivery frequency band in the delivery time band,
wherein each of the plurality of reception apparatuses includes an electric power supply information notification unit that notifies, on the basis of the delivery information notified from the information delivery apparatus, the monitoring control apparatus of electric power supply information including an electric power supply amount and an electric power supply time for receiving the content ,
wherein the monitoring control apparatus includes:
an electric power supply evaluation unit that evaluates, on the basis of the electric power supply information notified from each of the plurality of reception apparatuses, the feasibility of electric power supply to the plurality of the reception apparatuses in the delivery time band; and
an electric power supply result notification unit that notifies the information delivery apparatus of a result of evaluation of the feasibility of electric power supply,
wherein the information delivery apparatus further includes:
an electric power supply evaluation result reception unit that receives the electric power supply feasibility result notified from the monitoring control apparatus; and
a content delivery unit that, when the electric power supply in the delivery time band is ensured by the electric power supply feasibility evaluation, delivers the acquired content to the plurality of reception apparatuses that are placed in a delivery-enabled state in accordance with the delivery information by utilizing the delivery frequency band in the delivery time band,
wherein the delivery information notification unit notifies, when the electric power supply in the delivery time band cannot be ensured by the electric power supply feasibility evaluation, the plurality of reception apparatuses in the region of the delivery information with one or both of the delivery time band and the delivery frequency band modified,
wherein each of the reception apparatuses further includes:
a control unit that, when the electric power supply in the delivery time band is ensured by the electric power supply feasibility evaluation, implements control based on the notified delivery information such that a content reception-enabled state is achieved; and
a content reception unit that receives the content delivered from the information delivery apparatus.
